(19) 

**Europäisches Patentamt**
**European Patent Office**
**Office européen des brevets**

(11) **EP 4 637 251 A1**

(12) **EUROPEAN PATENT APPLICATION**
published in accordance with Art. 153(4) EPC

(43) Date of publication:
**22.10.2025 Bulletin 2025/43**

(21) Application number: **23931774.6**

(22) Date of filing: **08.11.2023**

(51) International Patent Classification (IPC):
**H04W 74/08** (2024.01)   **H04W 72/12** (2023.01)

(52) Cooperative Patent Classification (CPC):
**H04W 72/0446; H04W 72/0453; H04W 72/12;**
**H04W 74/00; H04W 74/08; H04W 74/0833**

(86) International application number:
**PCT/CN2023/130368**

(87) International publication number:
**WO 2024/207727 (10.10.2024 Gazette 2024/41)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **04.04.2023   CN 202310371111**

(71) Applicant: **Honor Device Co., Ltd.**
**Shenzhen, Guangdong 518040 (CN)**

(72) Inventor: **ZHANG, Jian**
**Shenzhen, Guangdong 518040 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **COMMUNICATION METHOD AND APPARATUS**

(57)    This application provides a communication method and apparatus. The method includes: A terminal obtains access indication information of a repeatedly sent message, where the access indication information is used to indicate a random access occasion RO resource pool and/or a code resource pool of the repeatedly sent message. The RO resource pool of the repeatedly sent message is different from an RO resource pool of a single sent message, and/or the code resource pool of the repeatedly sent message is different from a code resource pool of the single sent message. The terminal determines the RO resource pool and/or the code resource pool of the repeatedly sent message based on the access indication information, determines a target resource from the RO resource pool and/or the code resource pool of the repeatedly sent message, and transmits the repeatedly sent message through the target resource. Through the method, a difference is that the repeatedly sent message is transmitted through an RO resource or a code resource of the single sent message, to obtain a time combination gain. In addition, when repeated sending is performed in a time domain, there is no need to wait for a complete time-domain resource configuration period, thereby shortening a time delay, and then implementing uplink coverage enhancement.

FIG. 4

## Description

This application claims priority to Chinese Patent Application No. 202310371111.2, filed with the China National Intellectual Property Administration on April 4, 2023 and entitled "COMMUNICATION METHOD AND APPARATUS", which is incorporated herein by reference in its entirety.

## TECHNICAL FIELD

This application relates to the field of communication technologies, and in particular, to a communication method and apparatus.

## BACKGROUND

With the development of mobile communication technologies, and in particular, the continuous development of a new generation of mobile communication technologies such as the fifth generation mobile communication technology (the fifth generation mobile networks, 5G for short), functions of a communication system are continuously enhanced. Specifically, the 5G communication system may provide an enhanced mobile broadband (enhanced Mobile Broadband, eMBB), have a faster connection, higher throughput, and a larger capacity, and provide ultra-reliable low-latency communications (ultra-reliable low-latency communications, uRLLC), so as to apply a network to a critical task scenario in which an uninterrupted and stable data link is needed, satisfy requirements of the scenario for ultra-high reliability and low latency of a wireless communication network, and can provide massive machine type communications (massive Machine Type Communications, mMTC). For example, the communication system is applied to an Internet of Things (Internet of Things, IoT) scenario, to interconnect a plurality of Internet of Things devices.

The communication system may include a network device such as a base station. Each base station may support communication between a plurality of terminals. The terminal may be user equipment (user equipment, UE). The base station may communicate with the terminal on a downlink (downlink) link or an uplink (uplink) link. The uplink refers to a link through which the terminal sends data to the base station, and the downlink refers to a link through which the base station sends data to the terminal. Each base station usually has a coverage, which is also referred to as a coverage area.

Currently, the communication system has relatively weak uplink (uplink) coverage, affecting performance of the communication system. How to enhance the uplink coverage has become an important concern in the industry.

## SUMMARY

This application provides a communication method and apparatus, which is intended to resolve problems that uplink coverage of a communication system is weak and performance of the communication system is affected.

To achieve the foregoing objectives, this application provides the following technical solutions.

A first aspect of this application provides a communication method. Specifically, the terminal may obtain access indication information of a repeatedly sent message, for example, receive access indication information configured by a network device. The access indication information is used to indicate a random access occasion (random access occasion, RO) resource pool and/or a code resource pool of the repeatedly sent message. The RO resource pool of the repeatedly sent message is different from an RO resource pool of a single sent message, and/or the code resource pool of the repeatedly sent message is different from a code resource pool of the single sent message. In other words, at least one resource pool in the RO resource pool or the code resource pool of the repeatedly sent message is different from a corresponding resource pool of the single sent message. The single sent message is specifically a message sent once, and the repeatedly sent message is specifically a message sent a plurality of times, for example, a message sent a plurality of times to implement coverage enhancement, which usually includes a first sent message (a message sent for the first time) and a non-first sent message (a message sent for an $i^{th}$ time, i being greater than 1). The terminal may determine the RO resource pool and/or the code resource pool of the repeatedly sent message based on the access indication information. Then the terminal may determine a target resource from the RO resource pool and/or the code resource pool of the repeatedly sent message, and transmit the repeatedly sent message through the target resource.

Through the method, a difference is that the repeatedly sent message is transmitted through the RO resource in the RO resource pool of the single sent message or through the code resource of the single sent message on a shared RO, so that a time combination gain can be obtained. In addition, when repeated sending is performed in a time domain, there is no need to wait for a complete time-domain resource configuration period, thereby shortening a time delay. In addition, in the method, a resource (such as a code resource and/or an RO resource) of the single sent message and a resource of the repeatedly sent message are distinguished, interference between a terminal transmitting the repeatedly sent message and a terminal transmitting the single sent message may be reduced, and performance of a communication system may be improved. The method provides a relatively complete repeated sending solution, thereby implementing uplink coverage enhancement.

In some possible implementations, the repeatedly sent message includes a first message transmitted through a physical random access channel (Physical Random Access Channel, PRACH). The first message carries a random access preamble. In this way, the PRACH uplink coverage enhancement may be implemented, and a success rate of the random access of the terminal may be improved.

In some possible implementations, the access indication information of the repeatedly sent message indicates that the RO resource pool of the repeatedly sent message is independent of the RO resource pool of the single sent message. The RO resource pool of the repeatedly sent message is independent of the RO resource pool of the single sent message, which may be that the RO resource pool of the repeatedly sent message and the RO resource pool of the single sent message do not share an RO.

Because the repeatedly sent message and the single sent message do not share the RO, interference between a terminal of the repeatedly sent message and a terminal of the single sent message may be greatly reduced, so that performance of the communication system is significantly improved.

In some possible implementations, the repeatedly sent message and the single sent message share a code resource pool. In other words, the repeatedly sent message and the single sent message share a code resource pool.

When the RO is not shared at all, the terminal can implement repeated sending without additionally generating a new code resource pool for the repeatedly sent message, thereby satisfying a service requirement and reducing complexity of the terminal.

In some possible implementations, the access indication information of the repeatedly sent message includes an RO configuration index of the repeatedly sent message or an RO offset of the repeatedly sent message relative to the single sent message. The RO configuration index of the repeatedly sent message points to a newly added RO. The newly added RO is also referred to as a newly defined RO. When the message is repeatedly sent, whether the first sent message or the non-first sent message applies to the foregoing newly defined RO.

Through the method, the RO is completely not shared by additionally configuring the RO configuration index of the repeatedly sent message, or the RO is completely not shared by configuring the RO offset of the repeatedly sent message relative to the single sent message, so that the method has relatively high availability.

In some possible implementations, the repeatedly sent message and the single sent message may share the RO resource pool. In other words, the RO resource pool of the repeatedly sent message and the RO resource pool of the single sent message completely share the RO. When the RO is completely shared, the access indication information of the repeatedly sent message indicates that the code resource pool of the repeatedly sent message is independent of the code resource pool of the single sent message. In other words, code division is performed on the repeatedly sent message and the single sent message.

In one aspect, the method may improve the utilization rate of the RO resource. In another aspect, by performing code division on the repeatedly sent message and the single sent message, the method may reduce interference between a terminal transmitting the repeatedly sent message and a terminal transmitting the single sent message.

In some possible implementations, the access indication information of the repeatedly sent message includes a second set of preamble generation parameters or a preamble grouping parameter. The second set of preamble generation parameters are different from the first set of preamble generation parameters in the access indication information of the single sent message. The second set of preamble generation parameters are used to generate preambles in the code resource pool of the repeatedly sent message. The preamble grouping parameter is used to group preambles generated by the first preamble generation parameters to obtain the preambles in the code resource pool of the repeatedly sent message and preambles in the code resource pool of the single sent message.

The method provides a plurality of different code division manners. For example, the preamble generation parameter is additionally configured, to generate a set of new preambles, so that a service requirement of a higher level may be satisfied. Alternatively, preambles generated by existing preamble generation parameters are divided into scopes, so as to obtain preambles dedicated to the repeatedly sent message. In this way, a calculation amount of the terminal can be reduced, and calculation overheads can be reduced.

In some possible implementations, a mapping rule for ROs in the RO resource pool of the repeatedly sent message follows a time-domain-first and frequency-domain-second priority. However, a mapping rule for the ROs in the RO resource pool of the single sent message may keep to follow a frequency-domain-first and time-domain-second priority. By modifying the mapping manner of the ROs of the repeatedly sent message, the method may enable the ROs in the shared RO resource pool to be mapped into different synchronization signal blocks (synchronization signal block, SSB), which may further improve anti-interference capability.

In some possible implementations, the mapping rule for the ROs in the RO resource pool of the repeatedly sent message follows a time-domain-first and frequency-domain-second priority in a slot, or follows a time-domain-first and frequency-domain-second priority within a random access period. During actual application, an appropriate mapping rule may be selected based on the service requirement to map the ROs in the RO resource pool of the repeatedly sent message to a corresponding synchronization signal block. In this way, different types of service requirements can be satisfied.

In some possible implementations, the access indication information of the repeatedly sent message indicates that an RO resource pool of a non-first sent message in the repeatedly sent message is independent of the RO resource pool of the single sent message. In this way, when the terminal transmitting the repeatedly sent message transmits the non-first sent message, interference to the terminal transmitting the single sent message may be greatly reduced, thereby improving performance of the communication system.

In some possible implementations, a first sent message in the repeatedly sent message and the single sent message share the RO resource pool. In other words, the RO resource pool of the repeatedly sent message and the RO resource pool of the single sent message share some ROs. Therefore, in one aspect, existing RO resources may be fully used, and in another aspect, interference may be reduced as much as possible. Communication quality may be improved.

In some possible implementations, the access indication information of the repeatedly sent message includes an RO configuration index of the repeatedly sent message or an RO offset of the repeatedly sent message relative to the single sent message. The RO configuration index of the repeatedly sent message points to a newly added RO, and the newly added RO or the offset RO is used to send the non-first sent message.

Different from the solution in which the RO is completely not shared, in the solution in which the RO is completely shared, the RO configuration index or the RO offset of the repeatedly sent message is associated with the RO configuration index of the single sent message. In this way, transmission of the repeatedly sent message may be collaboratively completed based on the access indication information of the repeatedly sent message and the access indication information of the single sent message.

In some possible implementations, a mapping rule for ROs in the RO resource pool of the repeatedly sent message follows a time-domain-first and frequency-domain-second priority. According to the method, the mapping manner of all ROs in the RO resource pool of the repeatedly sent message is modified, so that the ROs shared by the RO resource pool of the repeatedly sent message and the RO resource pool of the single sent message can also be mapped to different SSBs, thereby further improving the anti-interference capability.

In some possible implementations, the mapping rule for the ROs in the RO resource pool of the repeatedly sent message follows a time-domain-first and frequency-domain-second priority in a slot, or follows a time-domain-first and frequency-domain-second priority within a random access period. In this way, different types of service requirements may be satisfied.

In some possible implementations, a mapping rule for ROs in the RO resource pool of the non-first sent message in the repeatedly sent message follows a time-domain-first and frequency-domain-second priority. The ROs in the RO resource pool of the non-first sent message is a newly added RO. In other words, the mapping rule for the newly added RO in the RO resource pool of the repeatedly sent message follows the time-domain-first and frequency-domain-second priority.

The method may improve the anti-interference capability and communication quality by modifying the mapping rule for the newly added RO to the time-domain-first and frequency-domain-second priority.

In some possible implementations, the mapping rule for the ROs in the RO resource pool of the non-first sent message follows a time-domain-first and frequency-domain-second priority in a slot, or follows a time-domain-first and frequency-domain-second priority within a random access period. In this way, different types of service requirements may be satisfied.

In some possible implementations, the repeatedly sent message and the single sent message share a code resource pool. In the method, the RO shared by the RO resource pool of the repeatedly sent message and the RO resource pool of the single sent message uses a same mapping rule. Therefore, a same code resource pool may be used to transmit the repeatedly sent message, thereby improving code resource utilization. In addition, a new code resource does not need to be additionally generated, and complexity of the terminal is reduced.

In some possible implementations, the method may be applied to a communication system including a terminal and a network device. The network device may be a device configured to provide a network communication function on a network side, which is also referred to as a network element in some cases. The network device may generally be a base station, a functional unit of a base station, or a combination of functional units of a base station. In the foregoing method, when a terminal performs the communication method of this application, a time combination gain can be obtained, and a delay of repeated transmission can be shortened, thereby implementing uplink coverage enhancement.

A second aspect of this application provides a communication method. Specifically, a network device configures access indication information of a repeatedly sent message. The access indication information is used to indicate a random access occasion RO resource pool and/or a code resource pool of the repeatedly sent message. The RO resource pool of the repeatedly sent message is different from an RO resource pool of a single sent message, and/or the code resource pool of the repeatedly sent message is different from a code resource pool of the single sent message. The network device sends the access indication information to the terminal, so that the terminal determines an RO resource pool and/or a code resource pool of the repeatedly sent message based on the access indication information, determines a target resource from the RO resource pool and/or the code resource pool of the repeatedly sent message, and transmits the repeatedly sent message through the target resource.

In some possible implementations, the repeatedly sent message includes a first message transmitted through a physical random access channel PRACH, and the first message carries a random access preamble.

A third aspect of this application provides a communication method. Specifically, a terminal obtains access indication information of a repeatedly sent message, where the access indication information is used to indicate that a random access occasion RO resource pool of the repeatedly sent message is independent of an RO resource pool of a single sent message. The terminal determines the RO resource pool of the repeatedly sent message based on the access indication information. The terminal determines a target RO resource from the RO resource pool of the repeatedly sent message, and transmitting the repeatedly sent message through the target RO resource.

In some possible implementations, the repeatedly sent message includes a first message transmitted through a physical random access channel PRACH, and the first message carries a random access preamble.

In some possible implementations, the repeatedly sent message and the single sent message share a code resource pool.

In some possible implementations, the access indication information of the repeatedly sent message includes an RO configuration index of the repeatedly sent message or an RO offset of the repeatedly sent message relative to the single sent message, and the RO configuration index of the repeatedly sent message points to a newly added RO.

In some possible implementations, a mapping rule for ROs in the RO resource pool of the repeatedly sent message follows a time-domain-first and frequency-domain-second priority.

In some possible implementations, the mapping rule for the ROs in the RO resource pool of the repeatedly sent message follows a time-domain-first and frequency-domain-second priority in a slot, or follows a time-domain-first and frequency-domain-second priority within a random access period.

A fourth aspect of this application provides a communication method. Specifically, a terminal obtains access indication information of a repeatedly sent message, where the access indication information is used to indicate that a code resource pool of the repeatedly sent message is independent of a code resource pool of the single sent message. The terminal determines the code resource pool of the repeatedly sent message based on the access indication information. The terminal determines a target code resource from the code resource pool of the repeatedly sent message, and transmits the repeatedly sent message through the target code resource.

In some possible implementations, the repeatedly sent message and the single sent message share an RO resource pool.

In some possible implementations, the access indication information of the repeatedly sent message includes a second set of preamble generation parameters or a preamble grouping parameter, the second set of preamble generation parameters are different from a first set of preamble generation parameters in the access indication information of the single sent message, the second set of preamble generation parameters are used to generate preambles in the code resource pool of the repeatedly sent message, and the preamble grouping parameter is used to group preambles generated by the first preamble generation parameters to obtain the preambles in the code resource pool of the repeatedly sent message and preambles in the code resource pool of the single sent message.

In some possible implementations, a mapping rule for ROs in the RO resource pool of the repeatedly sent message follows a time-domain-first and frequency-domain-second priority.

In some possible implementations, the mapping rule for the ROs in the RO resource pool of the repeatedly sent message follows a time-domain-first and frequency-domain-second priority in a slot, or follows a time-domain-first and frequency-domain-second priority within a random access period.

A fifth aspect of this application provides a communication method. Specifically, a terminal obtains access indication information of a repeatedly sent message, where the access indication information is used to indicate that an RO resource pool of a non-first sent message in the repeatedly sent message is independent of an RO resource pool of a single sent message. The terminal determines an RO resource pool of a first sent message in the repeatedly sent message and the RO resource pool of the non-first sent message based on the access indication information. The terminal sends a first message in the repeatedly sent messages through the first RO in the RO resource pool of the first sent message, and sends remaining messages in the repeatedly sent messages through the second RO in the RO resource pool of the non-first sent message.

In some possible implementations, the access indication information of the repeatedly sent message includes an RO configuration index of the repeatedly sent message or an RO offset of the repeatedly sent message relative to the single sent message, the RO configuration index of the repeatedly sent message points to a newly added RO, and the newly added RO or the offset RO is used to send the non-first sent message.

In some possible implementations, a mapping rule for ROs in the RO resource pool of the repeatedly sent message follows a time-domain-first and frequency-domain-second priority.

In some possible implementations, the mapping rule for the ROs in the RO resource pool of the repeatedly sent message follows a time-domain-first and frequency-domain-second priority in a slot, or follows a time-domain-first and frequency-domain-second priority within a random access period.

In some possible implementations, a mapping rule for ROs in the RO resource pool of the non-first sent message in the repeatedly sent message follows a time-domain-first and frequency-domain-second priority.

In some possible implementations, the mapping rule for the ROs in the RO resource pool of the non-first sent message in the repeatedly sent message follows a time-domain-first and frequency-domain-second priority in a slot, or follows a time-domain-first and frequency-domain-second priority within a random access period.

A sixth aspect of this application provides a communication apparatus, including a memory and at least one processor. The memory is configured to store a program. The at least one processor is configured to execute the program, to enable the communication apparatus to implement the communication method according to the first aspect, the second aspect, the third aspect, the fourth aspect, or the fifth aspect of this application.

A seventh aspect of this application provides a computer storage medium, configured to store a computer program. The computer program, when executed, is configured to implement the communication method according to the first aspect, the second aspect, the third aspect, the fourth aspect, or the fifth aspect of this application.

## BRIEF DESCRIPTION OF DRAWINGS

FIG. 1 is an example diagram of a communication scenario between a base station and a terminal;

FIG. 2 is a flowchart of a random access according to an embodiment of this application;

FIG. 3 is a schematic diagram of a mapping relationship between an SSB and an RO according to an embodiment of this application;

FIG. 4 is a flowchart of a communication method according to an embodiment of this application;

FIG. 5A to FIG. 5E are a schematic diagram of a non-shared RO according to an embodiment of this application;

FIG. 6A to FIG. 6C are a schematic diagram of a mapping relationship between an RO of a repeatedly sent message or a single sent message and an SSB when an RO is completely shared according to an embodiment of this application;

FIG. 7A to FIG. 7F are a schematic diagram of a mapping relationship between an RO and an SSB when some ROs are shared according to an embodiment of this application;

FIG. 8 is an example diagram of a structure of a communication apparatus according to an embodiment of this application; and

FIG. 9 is an example diagram of a structure of another communication apparatus according to an embodiment of this application.

## DESCRIPTION OF EMBODIMENTS

Technical solutions in embodiments of this application are clearly and completely described below with reference to drawings in embodiments of this application. Terms used in the following embodiments are only intended to describe specific embodiments, and are not intended to limit this application. As used in this specification and the claims of this application, a singular expression form, "one", "a", "the", "foregoing", "the", or "this", is intended to also include "one or more" expression form, unless clearly indicated to the contrary in the context. It should be further understood that, in embodiments of this application, "at least one" means one, two, or more than two. The term "and/or" describes an association relationship between associated objects and represents that three relationships may exist. For example, A and/or B may represent: only A exists, both A and B exist, and only B exists, where A and B may be singular or plural. The character "/" generally indicates an "or" relationship between a preceding associated object and a succeeding associated object.

Reference to "one embodiment" or "some embodiments" in this specification means that a specific feature, structure, or characteristic described in combination with this embodiment is included in one or more embodiments of this application. Therefore, statements "in an embodiment", "in some embodiments", "in some other embodiments", "in some additional embodiments", and the like throughout this specification do not necessarily refer to the same embodiment, but mean "one or more but not all embodiments", unless otherwise specially emphasized in another manner. Terms "comprise", "include", "have", and variations thereof all mean "including but not limited to", unless otherwise specially emphasized in another manner.

"A plurality of" involved in embodiments of this application means being greater than or equal to two. It should be noted that in descriptions of embodiments of this application, terms such as "first" and "second" are merely used for distinguishing descriptions, and cannot be understood as an indication or implication of relative importance, or an indication or implication of a sequence.

Embodiments of this application are applied to a communication system. The communication system may be a second generation (2G) communication system, a third generation (3G) communication system, an LTE system, a fifth generation (5G) communication system, a hybrid architecture of an LTE and 5G, a 5G new radio (5G New Radio, 5G NR) system, a new communication system appearing in future communication development, and the like.

EP 4 637 251 A1

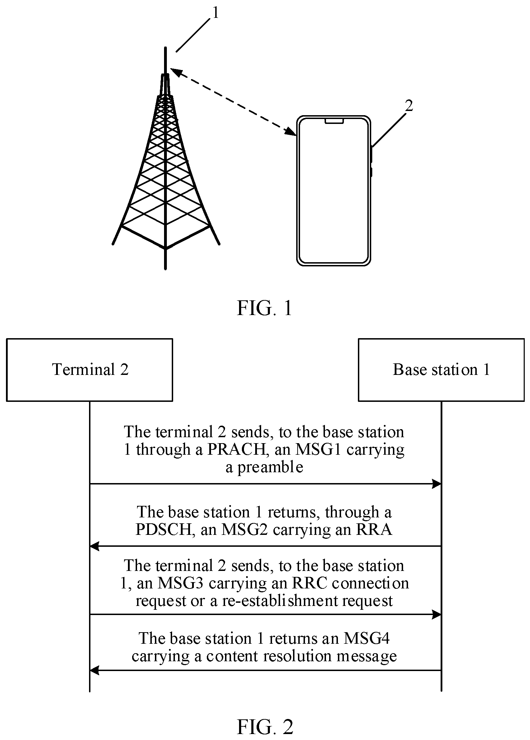

The communication system includes a network device and a terminal. The network device is a device configured to provide a network communication function on a network side, which is also referred to as a network element in some cases. The network device may generally be a base station, a functional unit of a base station, or a combination of functional units of a base station. An example of the communication system is shown in FIG 1. FIG. 1 includes a base station 1 and a terminal 2.

In this embodiment provided in this application, the base station may be any device having a radio transceiver function, and includes, but is not limited to: an evolved base station (an NodeB, an eNB, or an e-NodeB, an evolutional Node B) in a long term evolution (long term evolution, LTE), a base station (a gNodeB or a gNB) or a transmission receiving point/transmission reception point (transmission receiving point/transmission reception point, TRP) in new radio (new radio, NR), a 3GPP subsequently evolved base station, an access node in a Wi-Fi system, a wireless relay node, a wireless backhaul node, and the like. The base station may be a macro base station, a micro base station, a pico base station, a small station, a relay station, a balloon station, or the like. The base station may include one or more co-site or non-co-site transmission reception points (Transmission Reception Point, TRP). The base station may also be a wireless controller in a cloud radio access network (cloud radio access network, CRAN) scenario, a centralized unit (centralized unit, CU), and/or a distributed unit (distributed unit, DU). The base station may communicate with the terminal, or may communicate with the terminal through the relay station. The terminal may communicate with a plurality of base stations of different technologies. For example, the terminal may communicate with a base station supporting an LTE network, or may communicate with a base station supporting a 5G network, or may perform dual connectivity with a base station supporting an LTE network and a base station supporting a 5G network.

In this embodiment provided in this application, the terminal may be in various forms, for example, a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), an on-board terminal device, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal device, or the like. Sometimes, the terminal may also be referred to as a terminal device, user equipment (user equipment, UE), an access terminal device, an on-board terminal, an industrial control terminal, a UE unit, a UE station, a mobile station, a mobile console, a remote station, a remote terminal device, a mobile device, a UE terminal device, a terminal device, a wireless communication device, a UE proxy, a UE apparatus, or the like. The terminal may also be a fixed terminal or a mobile terminal.

A wireless link is established between the terminal 2 and the base station 1 on the network side. To perform data interaction operation through the wireless link, random access (random access) usually needs to be first performed. The random access refers to a process from a moment at which a user starts to attempt to access a network by sending a random access preamble (which may also be referred to as a preamble for short) through a physical random access channel (Physical Random Access Channel, PRACH) to a moment at which a basic signaling connection is established to the network.

The PRACH is an access channel when the terminal 2 starts to initiate a call. After the terminal 2 receives a random access response message from the network device, the terminal transmits a radio resource control (radio resource control, RRC) connection request message on the PRACH channel based on information indicated by the network device, to establish an RRC connection. Generally, one PRACH may include one preamble. The preamble is a Zadd Off Chu (ZC) sequence with a length of $L_{RA}$: $\{x(0), x(1), \dots x(L_{RA} - 1)\}$. The preambles may be classified into two types: a long preamble (long preamble) and a short preamble (short preamble). The long preambles are divided into four formats (format), which are respectively as follows: format0, format1, format2, and format3. The short preambles are divided into nine formats, which are respectively as follows: A1, A2, A3, B1, B2, B3, B4, C0, and C2. In a time domain, one preamble includes one cyclic prefix (cyclic prefix, CP), one preamble sequence (preamble sequence), and one spare guard period (guard period).

FIG. 2 shows a process of random access. FIG. 2 is described by using a 4-step random access as an example. As shown in FIG. 2, a terminal 2 sends a first message (denoted as an MSG1) to the base station 1 through a PRACH. The first message carries a preamble preamble. The base station 1 may perform blind detection for the preamble in the PRACH. If the preamble is detected, the base station may feed back a second message (denoted as an MSG2), which is specifically a random access response (Radom Access Response, RAR), on a physical downlink shared channel (Physical Downlink Shared Channel, PDSCH) in a random access response window.

The RAR may include a preamble (for a matching operation by the terminal 2) in the MSG1, an uplink timing advance (Timing Advance, TA) of the terminal 2, a backoff rollback parameter (reconnection time should be delayed for re-initiating a preamble code), scheduling information UL_Grant (including content such as whether a frequency hopping, a modulation and coding rate, an access resource, and an access moment) of a physical uplink shared channel (Physical Uplink Shared Channel, PUSCH) allocated for transmitting a third message (MSG3), and a temple C-RNTI (for scrambling by the MSG3).

7

The terminal 2 may obtain uplink synchronization based on the TA in the RAR, and transmit the third message (denoted as the MSG3) in the uplink resource allocated by the base station 1 to the terminal, so as to perform subsequent data transmission. The MSG3 may carry a RRC connection request (RRC Connection Request) or a RRC connection re-establishment request (RRC Connection Re-establishment Request). The base station 1 sends a fourth message (denoted as an MSG4), which is specifically a content resolution message, to the terminal 2 through a downlink resource.

However, the PRACH has relatively weak coverage, especially uplink coverage, greatly affecting performance of the communication system. Therefore, the terminal 2 may repeatedly send the preamble for a plurality of times (for example, repeatedly send the first message on a single beam for a plurality of times) in one PRACH transmission. More repeated times indicates larger coverage. The network device, for example, the base station 1, may configure a quantity of preambles that need to be generated and a bit number $N_{CS}$ by which a root sequence is shifted each time and a root index (root index). The terminal may generate the preamble based on the foregoing configuration. The base station 1 may further configure a location of a time-frequency domain random access occasion (random access occasion, RO), to send the preamble. The terminal 2 may find an RO corresponding to each synchronization signal block (Synchronization Signal Block, SSB) based on the foregoing configuration of the base station 1. ROs corresponding to one SSB include a time-domain resource of a random access occasion (a time domain RO) and a frequency-domain resource of a random access occasion (a frequency domain RO).

For the time domain RO, the terminal 2 may determine the time domain RO by looking up a table based on an RO configuration index configured by the base station 1, for example, a PRACH configuration index PRACH Configuration Index PRACH Configuration Index. In an example, as shown in Table 1, when the PRACH Configuration Index=111, the PRACH time domain RO is in a subframe #9 of all radio frames satisfying the frame number $n_f$ mod x = y. Starting from a symbol 0, one subframe includes 2 PRACH slots (also referred to as slots for short). Each PRACH slot includes 2 consecutive time domains ROs, and each time domain RO occupies 6 symbols.

**Table 1**

| PRACH Configuration Index | Preamble format | $n_f$ mod x=y | | subframe number | starting symbol | $n_t^{RA}$ | $n_{slot}^{RA}$ | $N_{dur}^{RA}$ |
| | | x | y | | | | | |
|---|---|---|---|---|---|---|---|---|
| ... | | | | | | | | |
| 111 | A3 | 8 | 1 | 9 | 0 | 2 | 2 | 6 |

x represents a PRACH time-domain resource configuration period (also referred to as a random access period, a time-domain resource configuration period of random access, and a time-domain resource configuration period), and y represents a radio frame for which a PRACH time-domain resource is configured in the PRACH time-domain resource configuration period. $n_t^{RA}$ represents a quantity of PRACH slots (PRACH Slots) in each subframe, $n_{slot}^{RA}$ is a quantity of consecutive time domains ROs in a PRACH slot, and $N_{dur}^{RA}$ is a quantity of symbols occupied by each PRACH time-frequency resource. It should be noted that Table 1 is specified by a 3GPP Protocol. In addition, Table 1 only shows some information specified by the 3GPP Protocol.

For a frequency domain RO, the terminal 2 may determine, based on the msg-FDM configured by the base station 1, an RO which a preamble can be sent in the frequency domain. For example, if msg-FDM=4, 4 ROs may exist in the frequency domain.

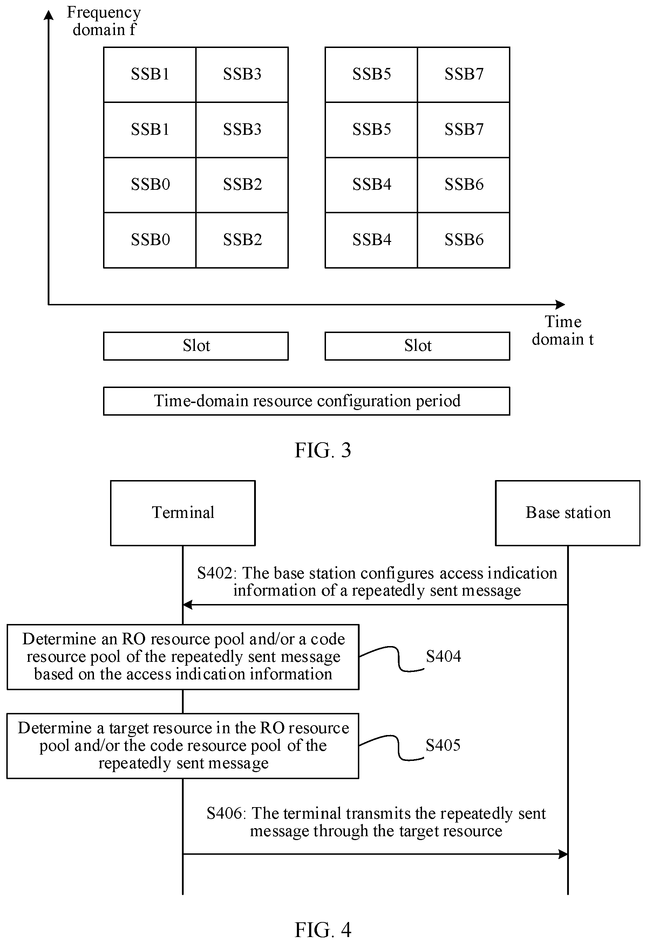

The terminal 2 may select the RO based on the quantity of SSBs corresponding to the RO configured by the base station 1, to send the preamble. For example, the base station 1 configures sb-perRACH-Occasion And CB-PreamblesPerSSB=(1/2, 64), which indicates that one SSB corresponds to two ROs, and a quantity of competition-based preambles that can be used by each SSB in one RO is 64. Because ssb-perRACH-Occasion<1, namely, when one SSB corresponds to a plurality of ROs, the ROs may be selected in an ascending order of a frequency-domain-first and time-domain-second priority. FIG. 3 is a schematic diagram of a mapping relationship between an SSB and an RO. In this example, one time-domain resource configuration period (denoted as a PRACH configuration period) includes 2 PRACH slots, each PRACH slot includes two time domains ROs, and msg-FDM=4.

In the foregoing example, when the terminal performs repeated preamble sending based on the foregoing RO configuration, a time combination gain (also referred to as a time-domain gain) is difficult to be obtained. If the terminal needs to perform repeated sending in a time domain, the terminal usually needs to wait for a time-domain resource configuration period, for example, 80 milliseconds (millisecond, ms). The time delay is relatively long, and a service requirement is difficult to be satisfied. In addition, a terminal transmitting a repeatedly sent message may cause interference to a terminal transmitting a single sent message, affecting performance of a communication system. The repeatedly sent message refers to a message transmitted for a plurality of times, and the single sent message refers to a message transmitted once. For a terminal with a small transmission power or a terminal in a weak coverage area, the terminal may transmit the repeatedly sent message to enhance coverage. The repeatedly sent message may further be divided into a first sent message and a non-first sent message. For a terminal with a large transmission power or a terminal in a strong coverage area, the terminal may transmit the single sent message. In view of the foregoing problem, this application provides a communication method. In the method, a terminal may obtain access indication information of the repeatedly sent message, where the access indication information is used to indicate an RO resource pool and/or a code resource pool of the repeatedly sent message. At least one resource pool in the RO resource pool or the code resource pool of the repeatedly sent message is different from a corresponding resource pool of the single sent message. In other words, the RO resource pool of the repeatedly sent message is different from an RO resource pool of the single sent message, and/or the code resource pool of the repeatedly sent message is different from a code resource pool of the single sent message. Then, the terminal may determine the RO resource pool and/or the code resource pool of the repeatedly sent message based on the access indication information. The terminal may determine a target resource from the RO resource pool and/or the code resource pool of the repeatedly sent message, and transmit the repeatedly sent message through the target resource.

Through the method, a difference is that the repeatedly sent message is transmitted through the RO resource in the RO resource pool of the single sent message or through the code resource of the single sent message on a shared RO, so that a time combination gain can be obtained. In addition, when repeated sending is performed in a time domain, there is no need to wait for a complete time-domain resource configuration period, thereby shortening a time delay. In addition, in the method, a resource (such as a code resource and/or an RO resource) of the single sent message and a resource of the repeatedly sent message are distinguished, interference between a terminal transmitting the repeatedly sent message and a terminal transmitting the single sent message may be reduced, and performance of a communication system may be improved. The method provides a relatively complete repeated sending solution, especially a Prach Repetition solution, to implement uplink coverage enhancement.

FIG. 4 is a flowchart of a communication method according to an embodiment of this application. In the process shown in FIG. 4, a description is provided by using an example in which the network device is a base station.

FIG. 4 includes the following steps.

S402: A terminal obtains access indication information of a repeatedly sent message configured by a base station.

S404: The terminal determines an RO resource pool and/or a code resource pool of the repeatedly sent message based on the access indication information.

The access indication information is used to indicate a random access occasion RO resource pool and/or a code resource pool of the repeatedly sent message. The repeatedly sent message refers to a message sent for two or more times. For example, in a random access process, when coverage is weak, the terminal may send a first message MSG1 for a plurality of times through a PRACH. A plurality of messages in a repeated message sending process may be divided into a first sent message and a non-first sent message. The repeatedly sent message corresponds to a single sent message. For example, in a random access process, when signal coverage is relatively strong, the terminal may send the first message MSG1 once through the PRACH.

The RO resource pool may be a resource pool formed by a time-frequency resource (a time-domain resource and a frequency-domain resource, which are also referred to as a time-domain RO and a frequency-domain RO) that can transmit a preamble in a random access process. The time-domain resource and the frequency-domain resource may be fragmented, and an RO may be a time-frequency resource fragment or a frequency-domain resource fragment that can transmit the preamble. The code resource pool may be a resource pool formed by a preamble resource in the random access process.

In some possible implementations, the access indication information of the repeatedly sent message may indicate that the RO resource pool (also referred to as a first RO resource pool) of the repeatedly sent message is independent of the RO resource pool (also referred to as a second RO resource pool) of the single sent message. In other words, the first RO resource pool and the second RO resource pool do not share an RO.

The base station may implement a non-shared RO in a plurality of manners. Descriptions are respectively provided below.

First manner: The base station configures an RO configuration index of the repeatedly sent message. The access indication information of the repeatedly sent message includes the foregoing RO configuration index. The RO configuration index of the repeatedly sent message is independent of an RO configuration index of the single sent message. The RO configuration index of the repeatedly sent message includes pointing to a newly added RO (a newly defined RO). When the message is repeatedly sent, whether the first sent message or the non-first sent message applies to the foregoing newly defined RO.

Second manner: The base station configures an RO offset of the repeatedly sent message relative to the single sent message. The access indication information of the repeatedly sent message includes the foregoing RO offset. The repeatedly sent message uses an offset RO based on the RO offset.

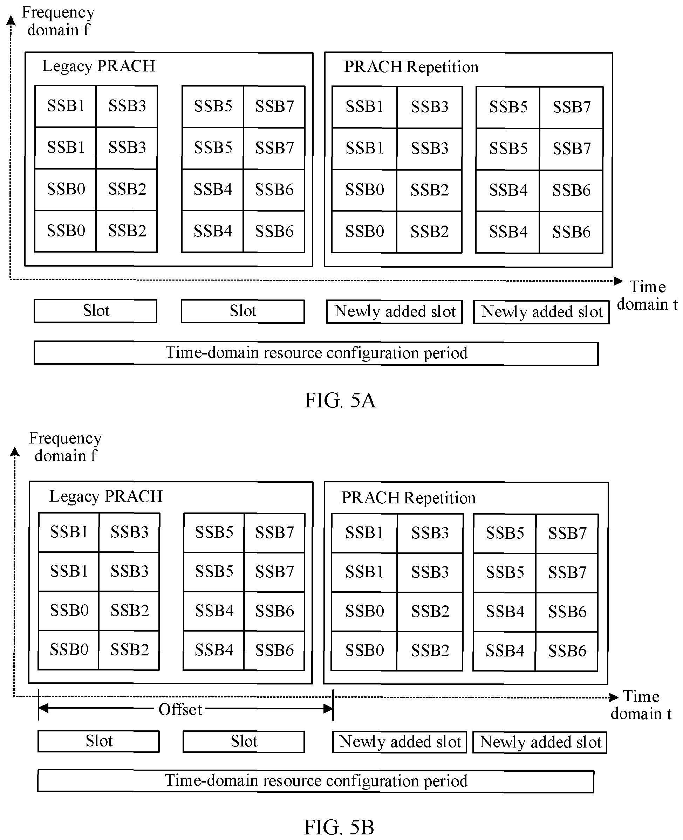

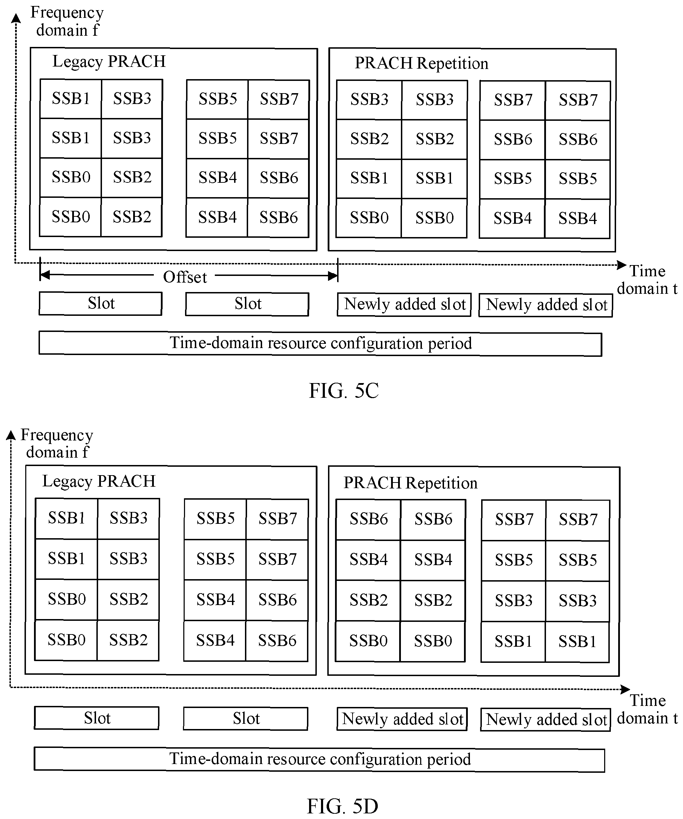

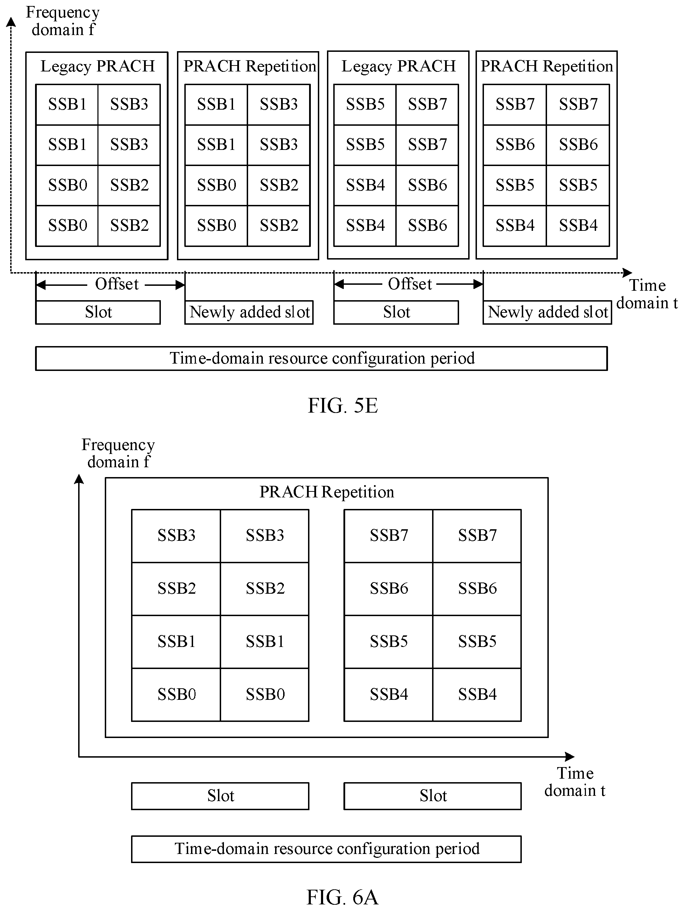

FIG. 5Ais a schematic diagram of forming an independent RO resource pool by configuring an additional RO configuration index. FIG. 5A is described by using an example in which each RO corresponds to 2 SSBs, namely, each SSB corresponds to 1/2 of an RO. A first RO resource pool (a resource pool formed by ROs corresponding to the SSBs selected in the PRACH Repetition box in FIG. 5A) of the repeatedly sent message may include a newly added RO, and a second RO resource pool (a resource pool formed by ROs corresponding to the SSBs selected in the legacy PRACH box in FIG. 5A) of the single sent message may be an original RO.

FIG. 5B is a schematic diagram of forming an independent RO resource pool by configuring an RO offset. In this example, each RO corresponds to 2 SSBs, and each SSB corresponds to 1/2 of an RO. The base station configures an RO offset of the repeatedly sent message relative to the single sent message, for example, an offset, to obtain an independent RO resource pool. Specifically, an RO resource pool (a resource pool formed by ROs corresponding to the SSBs selected in the PRACH Repetition box in FIG. 5B) that is formed by the RO resource pool (a resource pool formed by ROs corresponding to the SSBs selected in the legacy PRACH box in FIG. 5B) of the single sent message based on the offset is the RO resource pool of the repeatedly sent message.

FIG. 5A and FIG. 5B are described by using an example in which the ROs are mapped based on a mapping rule for a frequency-domain-first and time-domain-second priority. In some possible implementations, a mapping rule (for example, a mapping rule for the ROs in the first RO resource pool) for the ROs in the RO resource pool of the repeatedly sent message may follow a time-domain-first and frequency-domain-second priority. For example, in the protocol, the mapping rule for the ROs in the first RO resource pool may be configured to follow the time-domain-first and frequency-domain-second priority.

It should be noted that the mapping rule for ROs in the RO resource pool of the repeatedly sent message may follow the time-domain-first and frequency-domain-second priority in a slot. Referring to FIG. 5C, in a first RO resource pool (a resource pool formed by ROs corresponding to the SSBs selected in a PRACH Repetition box in FIG. 5C), the ROs in a same slot (for example, a newly added slot, denoted as an added PRACH slot or an added slot) are mapped to corresponding SSBs in a manner of a time-domain-first and frequency-domain-second priority. In a second RO resource pool (for example, a resource pool formed by ROs selected in a legacy PRACH box), the ROs are still mapped to corresponding SSBs in a manner of a frequency domain first and then a time domain.

The mapping rule for ROs in the RO resource pool of the repeatedly sent message may also follow a time-domain-first and frequency-domain-second priority within a random access period (for example, a time-domain resource configuration period of random access). Referring to FIG. 5D, in a first RO resource pool (a resource pool formed by ROs corresponding to SSBs selected in a PRACH Repetition box in FIG. 5D), ROs in a same time-domain resource configuration period (including 2 newly added slots in the example in FIG. 5D) are mapped to corresponding SSBs in a manner of a time-domain-first and frequency-domain-second priority. In a second RO resource pool (for example, a resource pool formed by ROs selected in a legacy PRACH box), the ROs are still mapped to corresponding SSBs in a manner of a frequency domain first and then a time domain.

In the solutions in FIG. 5A to FIG. 5D, the newly added ROs are continuous ROs. In some possible implementations, the newly added ROs may also be discontinuous. Referring to FIG. 5E, each slot may subsequently include a newly added slot. In this way, the newly added ROs may be discontinuous ROs.

In a solution in which the ROs are not shared, a repeatedly sent RO and a singly sent RO can be completely separated. Therefore, code division does not need to be performed for repeated sending and single sending. In other words, the repeatedly sent message and the single sent message may share a code resource pool. During specific implementation, in the protocol, the repeatedly sent message and the single sent message may be configured to share the code resource pool by default. In some examples, the base station may also configure a code resource use manner, so that the repeatedly sent message and the single sent message share the code resource pool by default.

In some possible implementations, the repeatedly sent message and the single sent message may also share an RO resource pool. In the protocol, the repeatedly sent message and the single sent message may be configured to share the RO resource pool by default. For example, if the base station is not additionally configured with an RO configuration index or an RO offset, the base station may share the RO resource pool by determining the repeatedly sent message and the single sent message. In some examples, the base station may also configure the access indication information, to implement that the repeatedly sent message and the single sent message share the RO resource pool. In other words, a time-frequency resource (a time-frequency RO) of an RO used for repeated sending and a time-frequency resource of an RO used for single sending may be completely shared. In this case, code division may be performed on repeated sending and single sending. In other words, a code resource pool of the repeatedly sent message is independent of a code resource pool of the single sent message. In this way, different code resources may be used for the single sent message and the repeatedly sent message.

Specifically, the base station may configure the access indication information of the repeatedly sent message to indicate that the code resource pool of the repeatedly sent message is independent of the code resource pool of the single sent message, thereby implementing code division of repeated sending and single sending. Code division of repeated sending and single sending may be implemented in a plurality of manners.

For example, the access indication information of the repeatedly sent message includes a second set of preamble generation parameters or a preamble grouping parameter, and the second set of preamble generation parameters are different from a first set of preamble generation parameters in the access indication information of the single sent message. The second set of preamble generation parameters are used to generate preambles in the code resource pool of the repeatedly sent message, and the preamble grouping parameter is used to group preambles generated by the first preamble generation parameters to obtain the preambles in the code resource pool of the repeatedly sent message and preambles in the code resource pool of the single sent message.

First manner: The access indication information of the repeatedly sent message includes the second set of preamble generation parameters. The second set of preamble generation parameters are different from the first set of preamble generation parameters in the access indication information of the single sent message. The first set of preamble generation parameters each is used to group preambles in the code resource pool of the single sent message. The second set of preamble generation parameters each is used for generating preambles in the code resource pool of the repeatedly sent message.

The preamble generation parameters may include one or more of bit number $N_{CS}$ by which a root sequence is shifted each time and a root index (root index) value. The terminal may generate a first code resource pool based on the first set of preamble generation parameters configured by the base station, and generate a second code resource pool based on the second set of preamble generation parameters configured by the base station. A preamble in the repeatedly sent message is from the first code resource pool, and a preamble in the single sent message is from the second resource pool.

Second manner: The access indication information of the repeatedly sent message includes the preamble grouping parameter. The terminal may generate preamble sequences based on the preamble generation parameters configured by the base station, and then group the preamble sequences based on the preamble grouping parameter, to obtain the first code resource pool and the second code resource pool. The preamble grouping parameter represents a grouping rule of the preambles. For example, the base station may divide a half of the preambles sorted first into the first code resource pool, and divide a half of the preambles sorted last into the second code resource pool.

When the ROs are completely shared, for ease of distinguishing the RO of the single sent message and the RO of the repeatedly sent message, the mapping rule for ROs in the RO resource pool of the repeatedly sent message may be modified to follow a time-domain-first and frequency-domain-second priority. In other words, the RO in the first RO resource pool may be mapped to a corresponding SSB in a manner of the time-domain-first and frequency-domain-second priority. The mapping rule for ROs in the RO resource pool of the single sent message still keeps the frequency domain first and then the time domain. In other words, the RO in the second RO resource pool is mapped to a corresponding SSB in a manner of the frequency domain first and then the time domain. The time-domain-first and frequency-domain-second priority may follow the time-domain-first and frequency-domain-second priority in the slot, or the time-domain-first and frequency-domain-second priority within the random access period.

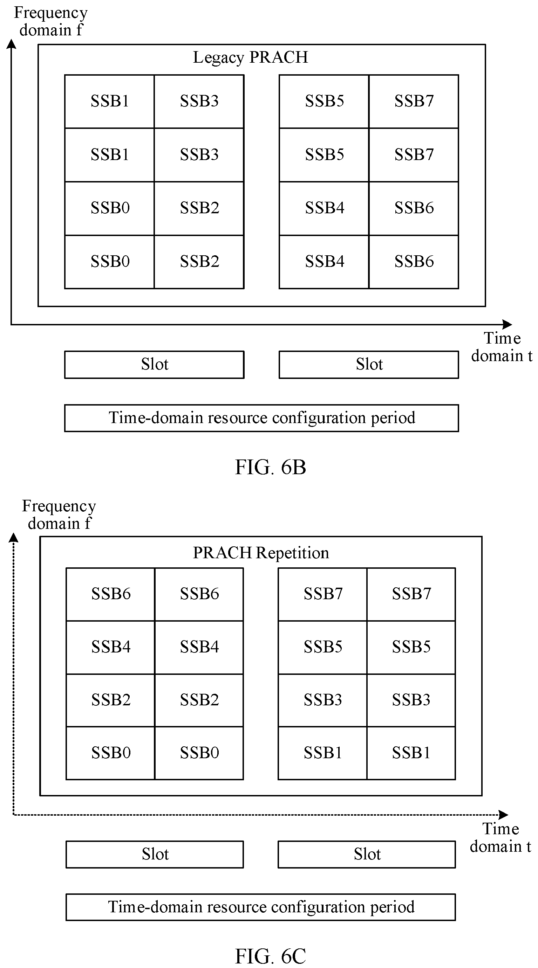

For ease of understanding, this application provides an example for description. Referring to a schematic diagram of a mapping relationship between an RO and an SSB in the first RO resource pool shown in FIG. 6A and a schematic diagram of a mapping relationship between an RO and an SSB in the second RO resource pool shown in FIG. 6B, as shown in FIG. 6A, the RO used for the repeatedly sent message is mapped to a corresponding SSB in an order of a time-domain-first and frequency-domain-second priority in a same PRACH slot. As shown in FIG. 6B, the RO used for the single sent message is mapped to a corresponding SSB in an order of a frequency domain first and then a time domain. In some examples, referring to a schematic diagram of a mapping relationship between an RO and an SSB in the first RO resource pool shown in FIG. 6C, the RO used for the repeatedly sent message may be mapped to a corresponding SSB in an order of a time-domain-first and frequency-domain-second priority within a same random access period, for example, a time-domain resource configuration period.

In some possible implementations, the repeatedly sent message and the single sent message may also partially share an RO resource pool. Specifically, the repeatedly sent message includes a first sent message and a non-first sent message. The access indication information of the repeatedly sent message indicates that an RO resource pool of a non-first sent message is independent of an RO resource pool of the single sent message. In this way, the base station or the terminal may determine that the first sent message in the repeatedly sent message and the single sent message share the RO resource pool. It should be noted that the base station may also directly configure, in the access indication information of the repeatedly sent message, the first sent message in the repeatedly sent message and the single sent message share the RO resource pool, thereby implementing that the repeatedly sent message and the single sent message partially share the RO resource pool.

The base station may share some ROs in a plurality of manners. Descriptions are respectively provided below.

First manner: The base station configures an RO configuration index of the repeatedly sent message. The access indication information of the repeatedly sent message includes the foregoing RO configuration index. The RO configuration index of the repeatedly sent message points to a newly added RO, and the newly added RO or the offset RO is used for sending the non-first sent message. The RO of the first sent message and the RO configuration index of the single sent message point to the original RO.

For ease of understanding, an example is used below for description. In this example, for ease of distinguishing, the RO configuration index of the single sent message is denoted as a Prach Configuration Index, and the RO configuration index of the repeatedly sent message is denoted as a Prach Configuration Repetition Index.

The base station may configure the Prach Configuration Repetition Index to 263, and may determine the RO by querying the following table segments.

**Table 2**

| PRACH Configuration Index | Preamble format | $n_f \bmod x = y$ | | subframe number | starting symbol | $n_t^{RA}$ | $n_{slot}^{RA}$ | $N_{dur}^{RA}$ |
|---|---|---|---|---|---|---|---|---|
| | | x | y | | | | | |
| 263 | A1 | 8 | 1 | 4,9 | 0 | 1 | 2 | 2 |

After the configuration is completed, the first sent messages in the single sent message and the repeatedly sent message may use an RO indicated by the Prach Configuration Index, and the non-first sent message in the repeatedly sent message may use an RO indicated by the Prach Configuration Repetition Index.

It should be noted that in some cases, the base station may configure a plurality of Prach Configuration Repetition Indexes, to add more newly defined ROs for the repeatedly sent message.

Second manner: The base station configures an RO offset (denoted as an offset) of the repeatedly sent message relative to the single sent message. The access indication information of the repeatedly sent message includes the foregoing RO offset. The non-first sent message in the repeatedly sent message uses an offset RO based on the RO offset. The base station configures an RO offset of the repeatedly sent message. Further, the first sent message in the repeatedly sent message and the single sent message use the original RO.

It should be noted that the base station may configure a plurality of RO offsets, for example, offset1 and offset2. The foregoing offset may be positive or negative. After the configuration is completed, the first sent messages in the single sent message and the repeatedly sent message may use an RO indicated by the Prach Configuration Index, and the non-first sent message in the repeatedly sent message may use an RO indicated by the Prach Configuration Index based on the offset RO.

When the ROs are partially shared, the mapping rule for the ROs in the RO resource pool of the repeatedly sent message may be consistent with the mapping rule for the ROs in the RO resource pool of the single sent message, for example, may follow the frequency-domain-first and time-domain-second priority. For ease of distinguishing the RO of the single sent message and the RO of the repeatedly sent message, the mapping rule for ROs in the RO resource pool of the repeatedly sent message may be modified to follow the time-domain-first and frequency-domain-second priority. In other words, the RO in the first RO resource pool may be mapped to a corresponding SSB in a manner of the time-domain-first and frequency-domain-second priority, and the mapping rule for ROs in the RO resource pool of the single sent message may still keep the frequency domain first and then the time domain. Namely, the RO in the second RO resource pool is mapped to a corresponding SSB in a manner of the frequency domain first and then the time domain. The time-domain-first and frequency-domain-second priority may follow the time-domain-first and frequency-domain-second priority in the slot, or the time-domain-first and frequency-domain-second priority within the random access period.

Considering that the first sent message of the repeatedly sent message and the single sent message share the RO resource pool, the mapping rule for ROs in the RO resource pool of the first sent message may still be the frequency domain first and then the time domain, and the mapping rule for ROs in the RO resource pool of the non-first sent message may be modified to follow the time-domain-first and frequency-domain-second priority.

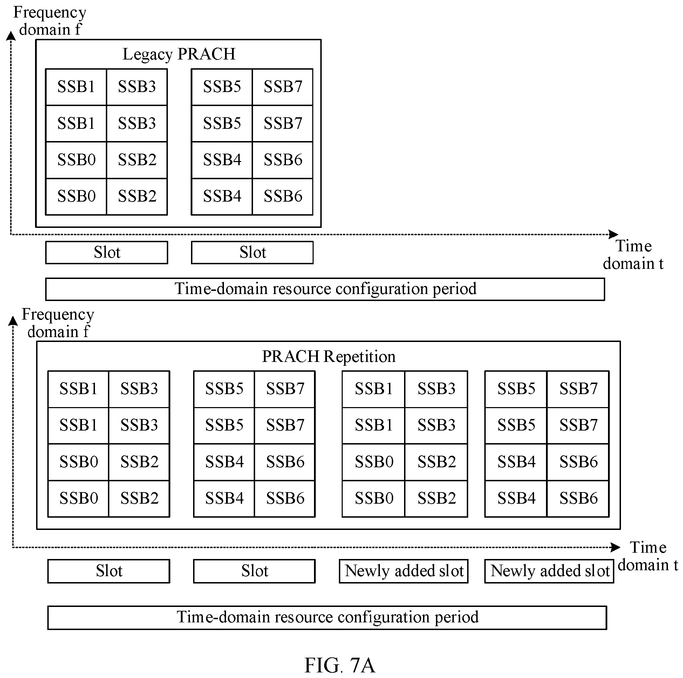

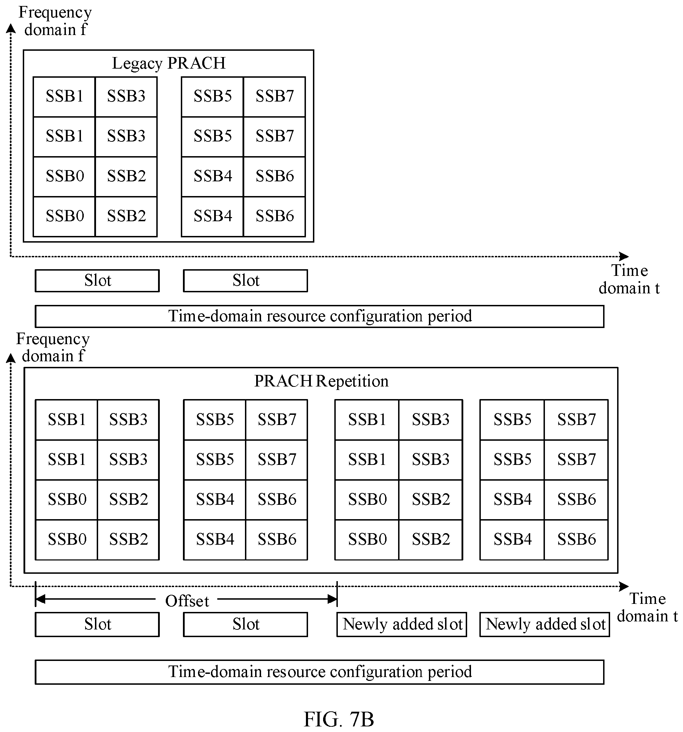

FIG. 7A and FIG. 7B are a schematic diagram of mapping relationships between ROs and SSBs when some ROs are shared. FIG. 7A and FIG. 7B are described by using an example in which each RO corresponds to 2 SSBs. In other words, each SSB corresponds to 1/2 of an RO. A first RO resource pool corresponding to a repeatedly sent message may include an original RO and a newly added RO, and a second RO resource pool corresponding to a single sent message may be an original RO. In the first RO resource pool, either the original RO or the newly added RO is still mapped to a corresponding SSB in a manner of a frequency domain first and then a time domain. In the second RO resource pool, the original RO is mapped to a corresponding SSB in a manner of a frequency domain first and then a time domain. FIG. 7A is described by using an example in which the base station configures an additional RO configuration index to newly add an RO, and FIG. 7B is described by using an example in which the base station configures an offset to newly add an RO.

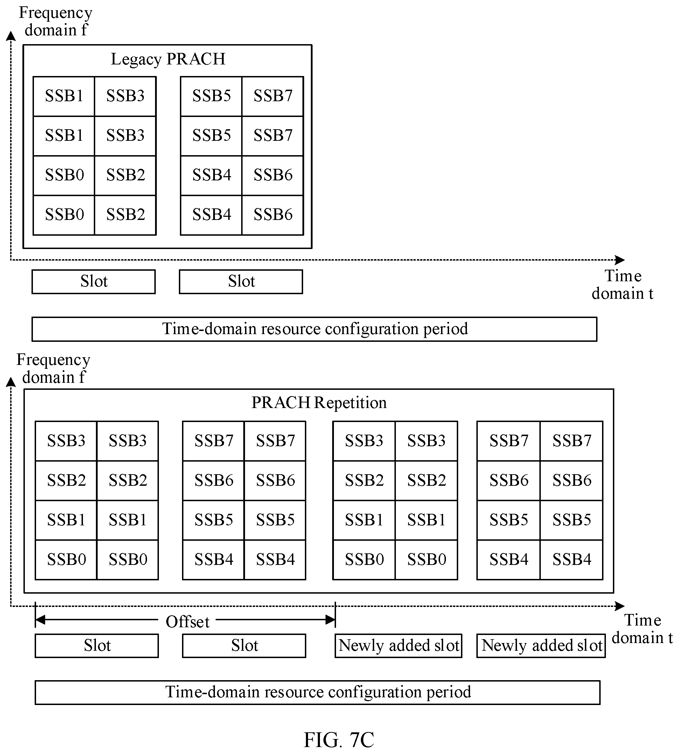

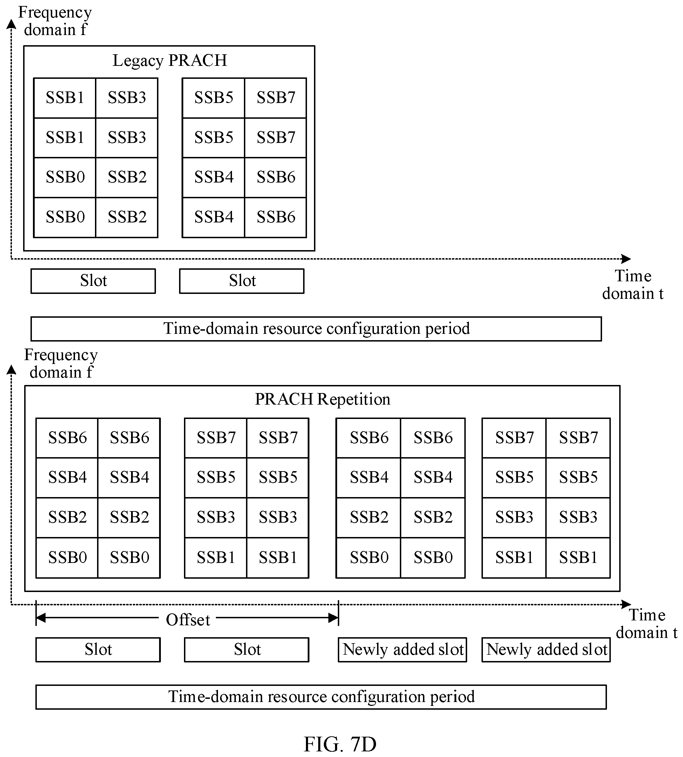

FIG. 7C and FIG. 7D are another schematic diagram of mapping relationships between ROs and SSBs when some ROs are shared. In this example, all ROs (all ROs in the first RO resource pool) used for repeated sending are mapped to corresponding SSBs in a manner of a time-domain-first and frequency-domain-second priority. FIG. 7C shows that all the ROs used for repeated sending are mapped to the corresponding SSBs in the manner of the time-domain-first and frequency-domain-second priority in a slot. FIG. 7D shows that all the ROs used for repeated sending are mapped to the corresponding SSBs in the manner of the time-domain-first and frequency-domain-second priority within a time-domain resource configuration period.

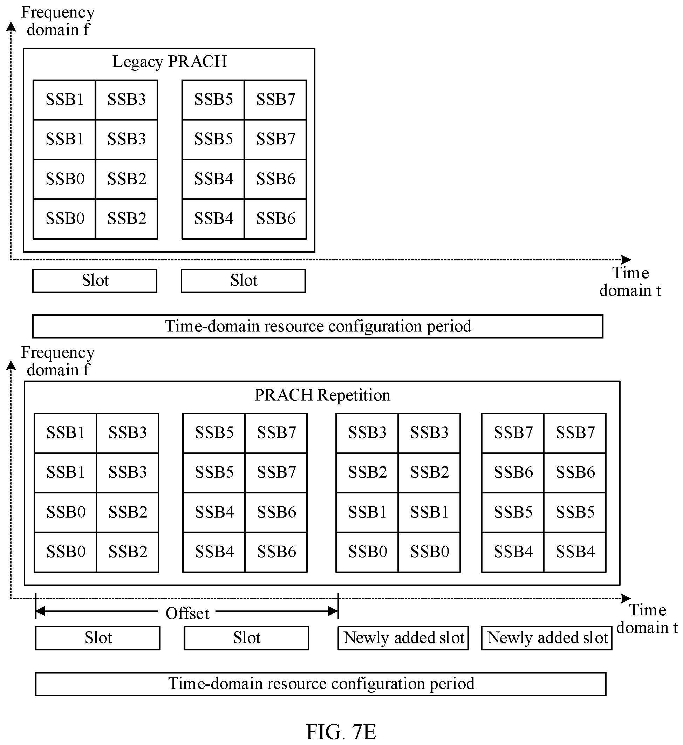

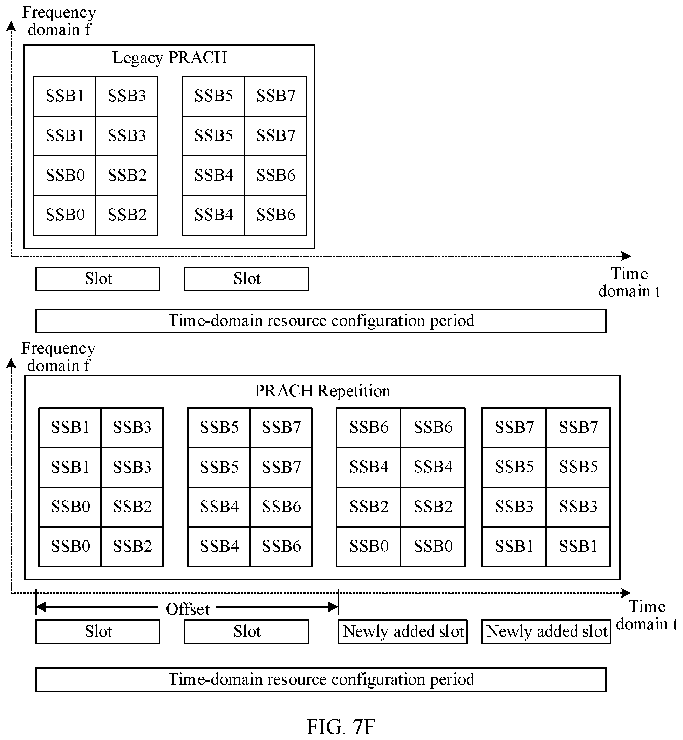

FIG. 7E and FIG. 7F are further a schematic diagram of mapping relationships between ROs and SSBs when some ROs are shared. In this example, the newly added RO (the newly added RO in the first RO resource pool) used for repeated sending is mapped to a corresponding SSB in a manner of a time-domain-first and frequency-domain-second priority. FIG. 7E shows that the newly added RO used for repeated sending is mapped to a corresponding SSB in the manner of the time-domain-first and frequency-domain-second priority in a slot. FIG. 7F shows that the newly added RO used for repeated sending is mapped to a corresponding SSB in the manner of the time-domain-first and frequency-domain-second priority within a time-domain resource configuration period.

When the mapping rule for the ROs in the RO resource pool of the non-first sent message follows the time-domain-first and frequency-domain-second priority in the slot, or the time-domain-first and frequency-domain-second priority within the random access period, for example, in the scenarios shown in FIG. 7E and FIG. 7F, the repeatedly sent message and the single sent message may share a code resource pool. In other words, code division may be not necessary for the repeatedly sent message and the single sent message.

In this way, the single sent message and the repeatedly sent message do not need the code division. the single sent message and the first sent message in the repeatedly sent message may share a same RO. The ROs of the repeatedly sent messages are spaced in the time domain, and the repeatedly sent message has a small time delay and a time-domain gain.

S402 and S404 are a specific implementation of obtaining, by the terminal, access indication information of the repeatedly sent message, and determining, based on the access indication information of the repeatedly sent message, an RO resource pool and/or a code resource pool of the repeatedly sent message. In another possible implementation of embodiments of this application, the terminal may also obtain the access indication information in another manner, and determine an RO resource pool and/or a target resource pool of the repeatedly sent message based on the access indication information.

S405: The terminal determines a target resource from the RO resource pool and/or a code resource pool of the repeatedly sent message.

S406: The terminal transmits the repeatedly sent message through the target resource in the RO resource pool and/or the code resource pool of the repeatedly sent message.

When the terminal determines the RO resource pool of the repeatedly sent message based on the access indication information, the terminal may determine the target RO resource from the RO resource pool of the repeatedly sent message. For example, the terminal may determine the target RO resource from the RO resource pool of the repeatedly sent message in a random sampling manner, or sample the target RO resource from the RO resource pool of the repeatedly sent message based on a set rule. The target resource includes the foregoing target RO resource. The terminal may transmit the repeatedly sent message through the foregoing target RO resource.

When the terminal determines the code resource pool of the repeatedly sent message based on the access indication information, the terminal may determine the target code resource from the code resource pool of the repeatedly sent message. In the random access process, the repeatedly sent message may be a plurality of first messages MSG transmitted by using a PRACH. The first message includes a preamble. The terminal may generate a preamble sequence based on preamble generation parameters, for example, a quantity of preambles, $N_{CS}$, and a root index. For example, the preamble sequence may include 64 preambles. The preambles in the preamble sequence may form a preamble resource pool. The terminal may determine, through the random sampling or based on the set rule, the target code resource from the code resource pool of the repeatedly sent message. The target resource also includes the foregoing target code resource. The terminal may transmit the repeatedly sent message through the foregoing target code resource.

When the terminal determines the RO resource pool and the code resource pool of the repeatedly sent message based on the access indication information, the terminal may determine the target RO resource from the RO resource pool of the repeatedly sent message, and determine the target code resource from the code resource pool of the repeatedly sent message. The target resource may include the target RO resource and the target code resource above. The terminal may transmit the repeatedly sent message through the target RO resource and the target code resource.

For a solution of some shared ROs, when determining the target RO resource, the terminal may determine the first RO from the RO resource pool (a subset of the RO resource pool of the repeatedly sent message) of the first sent message, and determine the second RO from the RO resource pool (another subset of the RO resource pool of the repeatedly sent message) of the non-first sent message. Correspondingly, the terminal may send the first message in the repeatedly sent message through the first RO, and sends remaining messages in the repeatedly sent message through the second RO in the RO resource pool of the non-first sent message.

Transmission of the repeatedly sent message by the terminal is described below by using an example in which the repeatedly sent message includes the first message to be sent for a plurality of times.

When sending the first message, the terminal may determine a to-be-sent preamble (for example, the target code resource) from the code resource pool. The terminal may sample the to-be-sent preamble from the code resource pool in the random manner, or may sample the to-be-sent preamble from the code resource pool based on the set rule. The set rule includes, but is not limited to, sequential sampling. The terminal may also determine the first RO (for example, the target RO resource) from the first RO resource pool, and send the first message carrying the foregoing preamble to the base station through a time-frequency resource of the first RO, and determine the second RO (for example, the target RO resource) from the first RO resource pool, and continue to send remaining messages to the base station through a time-frequency resource of the second RO. The remaining messages may be specifically the remaining first messages that carry the preambles.

Different terminals may select to send the first message through different preambles. It should be noted that when the repeatedly sent message and the single sent message need the code division, the terminal may send the first message through the preambles in the code resource pool of the repeatedly sent message when determining that the repeated sending is needed. When the repeatedly sent message and the single sent message share the code resource pool, the terminal may send the first message through the preambles in the shared code resource pool when determining that the repeated sending is needed.

In some possible implementations, the base station may configure a mapping relationship between a threshold and a number of times of repeated sending. For example, the base station may configure a first threshold (also referred to as a threshold, and denoted as threshhold1) and a corresponding number of times of repeated sending (denoted as K1). The base station may configure one or more mapping relationships. For example, the base station may also configure a second threshold (denoted as threshhold2) and a corresponding number of times of repeated sending (denoted as K2). In some examples, threshhold1=-100 dbm, K1=2, threshhold2=-110 dbm, and K2=3.

The terminal may obtain a reference signal received power (Reference Signal Received Power, RSRP), for example, an RSRP of an SSB corresponding to a beam scanning signal, and then determine the number of times of repeatedly sending the first message based on a magnitude relationship and a mapping relationship between the RSRP and the threshold. In some examples, when RSRP>threshhold1, the terminal may determine not to repeatedly send the first message; when Threshhold2<=RSRP<= threshhold1, the terminal may determine to repeatedly send the first message for K1 times; and when RSRP<threshhold2, the terminal may determine to repeatedly send the first message for K2 times.

It should be noted that the base station may also configure a mapping relationship between the threshold and a total number of times of sending. For example, the base station may configure the first threshold and a corresponding total number of times of sending. Similarly, the base station may configure one or more mapping relationships. For example, the base station may also configure the second threshold and a corresponding total number of times of sending. In this way, the terminal may alternatively obtain the RSRP of the SSB corresponding to the beam scanning signal, and determine the total number of times of sending the first message based on the magnitude relationship and the mapping relationship between the RSRP and the threshold.

Further, the base station may perform blind detection on a corresponding RO based on a configured maximum number of repetitions or a configured maximum total number of times of sending, to detect a random access request of the terminal, so as to establish a wireless link with the terminal.

Next, communication methods in different solutions are described.

A first solution is a solution in which a single RO is used for repeated sending (for example, Prach Repetition in a random access). In other words, the RO is not shared.

In the solution in which the RO is not shared, the communication method provided in embodiments of this application includes the following steps.

Step 1: The base station configures access indication information of the repeatedly sent message, where the access indication information indicates that the repeatedly sent message and the single sent message do not share the RO.

Specifically, the base station may configure the RO configuration index of the repeatedly sent message, for example, the PRACH Configuration Repetition Index. The RO configuration index is independent of the RO configuration index PRACH Configuration Index of the single sent message. In other words, the RO configuration index PRACH Configuration Repetition Index of the repeatedly sent message is not associated with the RO configuration index PRACH Configuration Index of the single sent message.

In some examples, the base station may also configure an RO offset of the repeatedly sent message. The terminal may determine, through the PRACH configuration index and the offset, the RO of the repeatedly sent message, including the RO of the first sent message.

When the repeatedly sent message and the single sent message do not share the RO, the repeatedly sent message and the single sent message may share the code resource. For example, the protocol may define that when the repeatedly sent message and the single sent message do not share the RO, the repeatedly sent message and the single sent message share the code resource.

It should be noted that Step 2 above may also not be performed. For example, if the base station configures a set of preamble generation parameters and does not configure a grouping rule, it may be considered that the repeatedly sent message and the single sent message share the code resource by default.

Step 2: The base station configures the mapping manner of the RO of the repeatedly sent message to follow a time-domain-first and frequency-domain-second priority.

Alternatively, the base station may not modify the mapping manner of the RO of the repeatedly sent message. For example, the mapping manner of the RO of the repeatedly sent message may also keep to follow the frequency-domain-first and time-domain-second priority. Because the repeatedly sent message may use a single RO, a time delay requirement can still be satisfied. In this solution, the base station may further shorten a time delay by modifying the mapping manner of the RO of the repeatedly sent message, to satisfy a higher-level service requirement.

It should be noted that the mapping manner of the RO may also be defined in the protocol. For example, the protocol may define that when the repeatedly sent message and the single sent message do not share the RO, the mapping manner of the RO of the repeatedly sent message is modified to follow the time-domain-first and frequency-domain-second priority, and no additional configuration is needed by the base station.

Step 3: The terminal obtains an RSRP of the SSB, and determines the number of times of repeated sending based on the magnitude relationship between the RSRP and the threshold.

Specifically, when RSRP>threshhold1, the terminal may determine that the number of times of repeated sending is 0. In other words, no repetition is performed. When threshhold2≤RSRP≤threshhold1, the terminal may determine that the number of times of repeated sending is K1. When RSRP<threshhold2, the terminal may determine that the number of times of repeated sending is K2.

Step 4: The terminal determines the RO resource pool of the repeatedly sent message based on the access indication information, determines a plurality of ROs from the RO resource pool of the repeatedly sent message based on the number of times of repeated sending, and respectively sends the first message through the plurality of ROs.

The first message carries a preamble, and the terminal may generate a preamble sequence, to form a preamble resource pool. Then, the terminal may select a preamble from the preamble resource pool, and carry the preamble in the first message. In addition, the terminal may determine the RO resource pool of the repeatedly sent message based on the access indication information, namely, the first RO resource pool. The terminal may determine a plurality of ROs from the first RO resource pool in the manner of the random sampling or according to the preset rule based on the number of times of repeated sending. In some examples, the plurality of ROs includes the first RO and the second RO. The terminal may send the first message through the first RO in the first RO resource pool. Next, the terminal may continue sending the first message through the second RO in the first RO resource pool.

A process of generating the preamble id described below.

The base station may configure the total number of preambles for the terminal through a parameter msgA-TotalNumberofRA-Preambles-r16. Generally, the total quantity of preambles is 64 by default. The 3GPP Protocol stipulates that cyclic shifting is first performed on one root sequence, and if 64 preambles cannot be generated through this operation, cyclic shifting is performed on a next root sequence, until all 64 preambles are generated.

The base station may configure, for the terminal, a bit number $N_{CS}$ by which the root sequence is shifted each time through a parameter zeroCorrelationZoneConfig. In other words, the network device sends a parameter zeroCorrelationZoneConfig to the terminal, and the terminal may determine $N_{CS}$ corresponding to the parameter through looking up the table.

The base station may configure the length $L_{RA}$ of the root sequence and a root index (root index) for the base station through the parameter msgA-PRACH-RootSequenceIndex-r16.Generally, the parameter msgA-PRACH-RootSequenceIndex-r16 includes two parameters: the length $L_{RA}$ and a value i. $L_{RA}$=839 or $L_{RA}$=139.The value i has a correspondence with the root sequence number u (namely, the root index). To be specific, the base station indicates the value i to the terminal, and the terminal may determine a root sequence number u corresponding to the value i through looking up the table, where i=0, 1, ..., and 15.

It is assumed that zeroCorrelationZoneConfig=6, $L_{RA}$=839, and i=20, a method for generating the preamble is as follows.

For example, Table 3 shows values $N_{CS}$ for an unrestricted set (unrestricted set), a restricted set type A (restricted set type A), and a restricted set type B (restricted set type B) corresponding to each of different values of zeroCorrelationZoneConfig.

**Table 3**

| Zero Correlation Zone Config | Value $N_{CS}$ | | |
| --- | --- | --- | --- |
| | Unrestricted set | Restricted set type A | Restricted set type B |
| 0 | 0 | 15 | 15 |
| 1 | 13 | 18 | 18 |
| 2 | 15 | 22 | 22 |

(continued)

| Zero Correlation Zone Config | Value $N_{CS}$ | | |
|---|---|---|---|
| | Unrestricted set | Restricted set type A | Restricted set type B |
| 3 | 18 | 26 | 26 |
| 4 | 22 | 32 | 32 |
| 5 | 26 | 38 | 38 |
| **6** | **32** | 46 | 46 |
| 7 | 38 | 55 | 55 |
| 8 | 46 | 68 | 68 |
| 9 | 59 | 82 | 82 |
| 10 | 76 | 100 | 100 |
| 11 | 93 | 128 | 118 |
| 12 | 119 | 158 | 137 |
| 13 | 167 | 202 | - |
| 14 | 279 | 237 | - |
| 15 | 419 | - | - |

The terminal may obtain the following by looking up Table 3. When zeroCorrelationZoneConfig=6, the unrestricted set $N_{CS}$=32.

Then, the terminal may perform rounding down on $\dfrac{L_{RA}}{N_{CS}} = \dfrac{839}{32}$ , to obtain v=0, 1, ..., 25, $C_V = V \cdot N_{CS} = 0,32,64 ...,832$.

For example, Table 4 shows a partial correspondence between the root sequence number u and the value i.

**Table 4**

| i | Value of the root sequence number u as the value i changes | | | | | | | | | |
|---|---|---|---|---|---|---|---|---|---|---|
| 0-9 | 129 | 710 | 140 | 699 | 120 | 719 | 210 | 629 | 168 | 671 |
| 10-19 | 84 | 755 | 105 | 734 | 93 | 746 | 70 | 769 | 60 | 779 |
| 20-29 | **2** | 837 | 1 | 838 | 56 | 783 | 112 | 727 | 148 | 691 |
| 30-39 | 80 | 759 | 42 | 797 | 40 | 799 | 35 | 804 | 73 | 766 |
| 40-49 | 146 | 693 | 31 | 808 | 28 | 811 | 30 | 809 | 27 | 812 |
| 50-59 | 29 | 810 | 24 | 815 | 48 | 791 | 68 | 771 | 74 | 765 |

The terminal may obtain the following by looking up Table 4. When i=20, u=2.

Then, the terminal may perform cyclic shifting on the root sequence by using the following formula, and the root sequence is shifted by 32 bits each time, to finally generate 64 preamble sequences. A specific implementation is as follows.

$$\text{When} \quad u = 2 \quad \text{and} \quad v = 0, \quad x_{2,0}(n) = x_2(n);$$

$$\text{when} \quad u = 2 \quad \text{and} \quad v = 1, \quad x_{2,1}(0) = e^{\frac{j\pi*32*33}{839}}, \quad x_{2,1}(1) = e^{\frac{j\pi*32*34}{839}}, \cdots$$

$$x_{2,1}(1) = e^{\frac{j\pi*32*35}{839}} \cdots \qquad\qquad (1)$$

$$\cdots$$

$$\text{when} \quad u = 2 \quad \text{and} \quad v = 25, \cdots$$

So far, the UE generates 26 preamble sequences by using a root sequence with u=2.

The terminal may obtain the following by further looking up Table 2. When i=21, u=837. With reference to the foregoing method, the terminal generates 26 preamble sequences by using a root sequence with u=837.

The terminal may obtain the following by further looking up Table 2. When i=21, u=1. With reference to the foregoing method, the terminal generates 12 preamble sequences by using a root sequence with u=1. Finally, a total of 64 preamble sequences are generated.

The second solution is a solution in which for repeated sending of the Preamble, a mapping manner of an RO is modified, that is, an RO is completely shared.

In the solution in which the RO is completely shared, the communication method provided in embodiments of this application includes the following steps.

Step 1: The base station configures access indication information of a repeatedly sent message, where the access indication information indicates that a code resource pool of the repeatedly sent message is independent of a code resource pool of the single sent message.

Step 2: The base station configures a mapping rule for ROs in the RO resource pool of the repeatedly sent message to follow a time-domain-first and frequency-domain-second priority.

Specifically, the mapping rule for the ROs remains follow the frequency-domain-first and time-domain-second priority for the single sent message. The mapping rule for the ROs is modified to follow the time-domain-first and frequency-domain-second priority for the repeatedly sent message.

Step 3: The terminal obtains an RSRP of the SSB, and determines the number of times of repeated sending based on the magnitude relationship between the RSRP and the threshold.

Specifically, when RSRP>threshhold1, the terminal may determine that the number of times of repeated sending is 0. In other words, no repetition is performed. When threshhold2≤RSRP≤threshhold1, the terminal may determine that the number of times of repeated sending is K1. When RSRPv<threshhold2, the terminal may determine that the number of times of repeated sending is K2.

Step 4: The terminal determines a code resource pool of the repeatedly sent message based on the access indication information, determines a target code resource from the code resource pool of the repeatedly sent message, and encapsulate the target code resource into the first message. The terminal may determine a plurality of ROs from the shared RO resource pool based on the number of times of repeated sending, and respectively send the first message through the plurality of ROs.

Specifically, the access indication information indicates to perform code division on the repeatedly sent message and the single sent message, and does not indicate to add the RO to transmit the repeatedly sent message, or to transmit the non-first sent message in the repeatedly sent message. The terminal may determine that the repeatedly sent message and the single sent message share an RO resource pool by default. In other words, the RO resource pool of the repeatedly sent message and the RO resource pool of the single sent message completely share the RO. The terminal may determine, through the random sampling or based on the preset rule, a plurality of ROs from the shared RO resource pool based on the number of times of repeated sending, and respectively send the first message through the plurality of ROs.

The first message is encapsulated with a preamble, and the preamble is from a code resource pool of the repeatedly sent message that is determined by the terminal based on the access indication information. Specifically, the terminal may generate, through a new preamble generation parameter, an entirely new preamble for repeated sending of the preamble, or divide a single-range preamble for repeated sending of the preamble. After determining the code resource pool of the repeatedly sent message, the terminal may determine, through the random sampling or based on the preset rule, a to-be-sent preamble from the code resource pool as the target code resource, and encapsulate the to-be-sent preamble into the first message.

In a second solution, a mapping rule for the ROs in the RO resource pool of the repeatedly sent message is modified to follow a time-domain-first and frequency-domain-second priority. The ROs are spaced in a time domain and have a small interval. A time delay of repeated sending is small, and a time-domain gain of repeated sending may be obtained.

A third solution is a solution in which an additional RO is added for repeated sending of the preamble. In other words, the RO is partially shared.

In the solution that the RO is partially shared, the communication method provided in embodiments of this application includes the following steps.

Step 1: The base station configures access indication information of the repeatedly sent message, where the access indication information indicates that the repeatedly sent message and the single sent message partially share the RO.

Specifically, the base station may configure the RO configuration index of the repeatedly sent message, for example, the PRACH Configuration Repetition Index. The RO configuration index is associated with the RO configuration index of the single sent message. In this way, first sent messages in the single sent message and the repeatedly sent message may use an RO configuration indicated by the PRACH Configuration Index, and a non-first sent message in the repeatedly sent message uses an RO configuration indicated by the PRACH Configuration Repetition Index.

In some examples, the base station may alternatively configure an RO of the repeatedly sent message to be an original RO+an offset RO based on an RO offset. In this way, the first sent messages in the single sent message and the repeatedly sent message may use an RO configuration indicated by the PRACH Configuration Index, and the non-first sent message in the repeatedly sent message uses an RO configuration indicated by the PRACH Configuration Index based on the offset RO.

When the repeatedly sent message and the single sent message partially share the RO, the repeatedly sent message and the single sent message may share the code resource. For example, the protocol may define that when the repeatedly sent message and the single sent message partially share the RO, the repeatedly sent message and the single sent message share the code resource.

Step 2: The terminal obtains an RSRP of the SSB, and determines the number of times of repeated sending based on the magnitude relationship between the RSRP and the threshold.

Specifically, when RSRP>threshhold1, the terminal may determine that the number of times of repeated sending is 0. In other words, no repetition is performed. When threshhold2≤RSRP≤threshhold1, the terminal may determine that the number of times of repeated sending is K1. When RSRP<threshhold2, the terminal may determine that the number of times of repeated sending is K2.

Step 3: The terminal determines the RO resource pool of the repeatedly sent message based on the access indication information, determines a plurality of ROs from the RO resource pool of the repeatedly sent message based on the number of times of repeated sending, and respectively sends the first message through the plurality of ROs.

The number of times of repeated sending is 0, which indicates that the terminal may not need to perform repeated sending, and the terminal may select, from the RO configuration indicated by the RO configuration index PRACH Configuration Index of the single sent message, the RO to send the first message. When the number of times of repeated sending is K1 or K2, the terminal may select a first RO from the RO configuration indicated by the PRACH Configuration Index, and use the first RO to first send the first message, and select a second RO from the RO resource pool formed by the RO configuration indicated by the PRACH Configuration Repetition Index or the RO configuration indicated by the PRACH Configuration Index based on an offset RO, and use the second RO to repeatedly send the first message.

In a third solution, the terminal may perform, based on a configuration of the base station, a plurality of repeated transmission of the PRACH on a plurality of ROs corresponding to a same beam, to implement coverage enhancement of the PRACH.

A fourth solution is a combination of the second solution and the third solution, specifically, partial sharing and modification of the mapping rule.

In the combined solution, the communication method provided in embodiments of this application includes the following steps.

Step 1: The base station configures access indication information of the repeatedly sent message, where the access indication information indicates that the repeatedly sent message and the single sent message partially share the RO.

The repeatedly sent message and the single sent message may share a code resource.

Step 2: The base station configures the mapping rule for a newly added RO corresponding to the repeatedly sent message to follow a time-domain-first and frequency-domain-second priority.

It should be noted that the base station may also configure the mapping rule for all ROs corresponding to the repeatedly sent message to follow a time-domain-first and frequency-domain-second priority. The time-domain-first and frequency-domain-second priority may be further divided into a time-domain-first and frequency-domain-second priority in a slot, or a time-domain-first and frequency-domain-second priority within a time-domain resource configuration period.

Step 3: The terminal obtains an RSRP of the SSB, and determines the number of times of repeated sending based on the magnitude relationship between the RSRP and the threshold.

Specifically, when RSRP>threshhold1, the terminal may determine that the number of times of repeated sending is 0. In other words, no repetition is performed. When threshhold2≤RSRP≤threshhold1, the terminal may determine that the number of times of repeated sending is K1. When RSRP<threshhold2, the terminal may determine that the number of times of repeated sending is K2.

Step 4: The terminal determines the RO resource pool of the repeatedly sent message based on the access indication information, determines a plurality of ROs from the RO resource pool of the repeatedly sent message based on the number of times of repeated sending, and respectively sends the first message through the plurality of ROs.

In a fourth solution, the single sent message and the repeatedly sent message do not need code division, and the single sent message and the first sent message in the repeatedly sent message may share a same RO. The terminal may determine the ROs of the repeatedly sent messages and the number of times of repeated sending based on the rule. The ROs of the repeatedly sent messages are spaced in the time domain, and the repeatedly sent message has a small time delay and a time-domain gain.

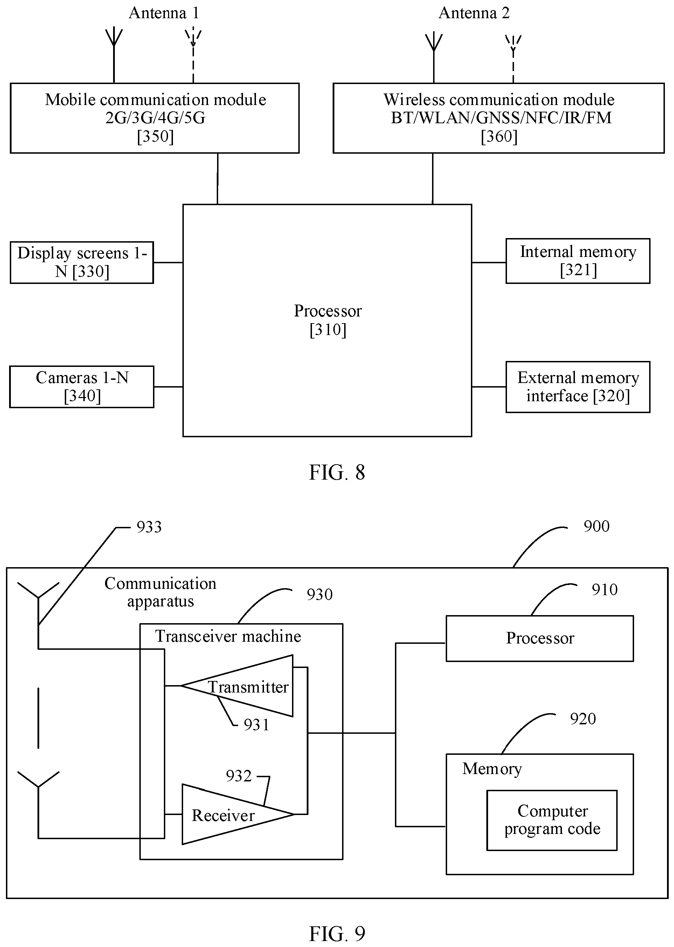

FIG. 8 is an example of composition of a communication apparatus according to an embodiment of this application. The communication apparatus may be a terminal, and includes, but is not limited to, an electronic device such as a mobile phone or a smart wearable device (such as a smartwatch). A mobile phone is used as an example below. The communication apparatus may include a processor 310, an external memory interface 320, an internal memory 321, a display screen 330, a camera 340, an antenna 1, an antenna 2, a mobile communication module 350, a wireless communication module 360, and the like.

It may be understood that the structure shown in this embodiment does not constitute a specific limitation on the communication apparatus. In some other embodiments, the communication apparatus may include more or fewer components than those shown in the figure, or some merged components, or some split components, or different component arrangements. The components shown in the figure may be implemented by using hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate devices, or may be integrated into one or more processors.

It may be understood that the interface connection relationship between the modules illustrated in this embodiment of the present invention is merely an example for description, and does not constitute a limitation on a structure of the electronic device. In some other embodiments of this application, the electronic device may also use an interface connection manner different from that in the foregoing embodiment, or use a combination of a plurality of interface connection manners.

The external memory interface 320 may be configured to connect to an external storage card such as a Micro SD card, to expand a storage capability of the electronic device. The external storage card communicates with the processor 310 through the external memory interface 320, to implement a data storage function. For example, files such as music and a video are stored in the external storage card.

The internal memory 321 may be configured to store computer executable program code, where the executable program code includes instructions. The processor 310 runs the instructions stored in the internal memory 321, to implement various functional applications and data processing of the electronic device. The internal memory 321 may include a program storage area and a data storage area. The program storage area may store an operating system, an application required for at least one function (for example, a sound playback function or an image playback function), and the like. The data storage area may store data (for example, audio data and an address book) and the like created when the electronic device is used. In addition, the internal memory 321 may include a high-speed random access memory, and may further include a non-volatile memory, for example, at least one magnetic disk storage device, a flash memory device, and a universal flash storage (universal flash storage, UFS). The processor 310 runs the instructions stored in the internal memory 321, and/or the instructions stored in the memory arranged in the processor, to perform various functional applications and data processing of the electronic device.

A wireless communication function of the electronic device may be implemented through the antenna 1, the antenna 2, the mobile communication module 350, the wireless communication module 360, the modem processor, the baseband processor, and the like.

The antenna 1 and the antenna 2 are configured to transmit and receive an electromagnetic wave signal. Each antenna in the electronic device may be configured to cover one or more communication frequency bands. Different antennas may be further reused to improve a utilization rate of the antennas. For example, the antenna 1 may be reused as a diversity antenna of a wireless local area network. In some other embodiments, the antenna may be used in combination with a tuning switch.

The mobile communication module 350 may provide a wireless communication solution including 2G/3G/4G/5G and the like applicable to the electronic device. The mobile communication module 350 may include at least one filter, a switch, a power amplifier, a low noise amplifier (low noise amplifier, LNA), and the like. The mobile communication module 350 may receive an electromagnetic wave through the antenna 1, perform processing such as filtering and amplification on the received electromagnetic wave, and transmit the processed electromagnetic wave to the modem processor for demodulation. The mobile communication module 350 may further amplify a signal modulated by the modem processor, and convert the signal into an electromagnetic wave through the antenna 1 for radiation. In some embodiments, at least some of functional modules of the mobile communication module 350 may be arranged in the processor 310. In some embodiments, at least some of the functional modules of the mobile communication module 350 may be arranged in a same device as at least some modules of the processor 310.

In some embodiments, the electronic device initiates or receives a call request through the mobile communication module 350 and the antenna 1.

In addition, an operating system runs on the foregoing components, for example, an iOS operating system, an Android operating system, or a Windows operating system. An application may be installed and run in the operating system.

FIG. 9 is an example of composition of another communication apparatus according to an embodiment of this application. The communication apparatus may be a network device, such as a base station. FIG. 9 is a schematic structural diagram of a simplified base station. The base station includes a part 910, a part 920, and a part 930. The part 910 is mainly configured to perform baseband processing, control the base station, and the like. The part 910 is generally a control center of the base station, may be generally referred to as a processor, and is configured to control the base station to perform a processing operation on the network device side in the foregoing method embodiments. The part 920 is mainly configured to store computer program code and data. The part 930 is mainly configured to receive and transmit a radio frequency signal and convert the radio frequency signal and the baseband signal. The part 930 may be generally referred to as a transceiver module, a transceiver, a transceiver circuit, a transceiver machine, or the like. The transceiver module of the part 930 may also be referred to as a transceiver, a transceiver machine, or the like. The transceiver module includes an antenna 933 and a radio frequency circuit (not shown in the figure). The radio frequency circuit is mainly configured to perform radio frequency processing. Optionally, a component configured to implement a receiving function in the part 930 may be considered as the receiver, and a component configured to implement a sending function may be considered as the transmitter. In other words, the part 930 includes a receiver 932 and a transmitter 931. The receiver may also be referred to as a receiving module, a receiver, a receiving circuit, or the like. The transmitter may be referred to as a transmitting module, a transmitter machine, a transmitting circuit, or the like.

The part 910 and the part 920 may include one or more boards. Each board may include one or more processors and one or more memories. The processor is configured to read and execute a program in the memory to implement a baseband processing function and control the base station. If a plurality of boards exist, the boards may be interconnected to enhance the processing capability. In an optional implementation, the plurality of boards may share one or more processors, or the plurality of boards share one or more memories, or the plurality of boards simultaneously share one or more processors.

For example, in an implementation, the transceiver module in the part 930 is configured to perform a process related to sending and receiving performed by the base station in the embodiment shown in FIG. 4. The processor in the part 910 is configured to perform a process related to processing performed by the base station in the embodiment shown in FIG. 4.

It should be understood that FIG. 9 is merely an example rather than a limitation, and the foregoing network devices including the processor, the memory, and the transceiver may not rely on the structure shown in FIG. 9.

It may be clearly understood by a person skilled in the art that, for convenient and brief description, the explanation and the beneficial effects of related contents in any communication apparatus provided above can refer to the corresponding method embodiment provided above. Details are not described herein again.

In this application, the terminal or the network device may include a hardware layer, an operating system layer running in the hardware layer, and an application layer running on the operating system layer. The hardware layer may include hardware such as a central processing unit (central processing unit, CPU), a memory management module (memory management unit, MMU), and a memory (also referred to as a main memory). An operating system at the operating system layer may be any one or more computer operating systems that implement service processing through a process (process), for example, a Linux operating system, a Unix operating system, an Android operating system, an iOS operating system, or a Windows operating system. The application layer may include an application such as a browser, an address book, word processing software, or instant messaging software.

It may be clearly understood by a person skilled in the art that, for the purpose of convenient and brief description, for a detailed operating process of the system, apparatus, and module described above, reference may be made to the corresponding process in the foregoing method embodiment. Details are not described herein again.

In the several embodiments provided in this application, it should be understood that the disclosed system, apparatus, and method may be implemented in other manners. For example, the apparatus embodiments described above are merely examples. For example, division of modules is merely logical function division and may be another division manner during actual implementation. For example, a plurality of modules or components may be combined or integrated into another system, or some features may be omitted or not executed. In addition, the displayed or discussed mutual couplings or direct couplings or communicative connections may be implemented through some interfaces. The indirect couplings or communicative connections between the apparatuses or modules may be electrical, mechanical, or in another form.

The modules described as separate components may or may not be physically separated, and the components displayed as modules may or may not be physical modules, that is, may be located in one place or may be distributed on a plurality of network modules. Some or all of the modules may be selected according to actual needs to achieve the objectives of the solutions of embodiments.

In addition, functional modules in embodiments of this application may be integrated into one processing module, or the functional modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated module may be stored in a computer-readable storage medium. Based on such an understanding, the part of the technical solutions of this application essentially making a contribution, or all or a part of the technical solutions may be implemented in a form of a software product. The computer software product is stored in a storage medium, and includes several instructions for instructing a computer device (which may be a personal computer, a server, a network device, or the like) to perform all or a part of the processes of the methods described in embodiments of this application. The foregoing storage medium includes any medium that can store program code, such as a USB flash drive, a removable hard disk, a read-only memory, a random access memory, a magnetic disk, or an optical disc.

Based on the above, the foregoing embodiments are merely intended to describe the technical solutions of this application, and are not intended to limit this application. Although this application is described in detail with reference to the foregoing embodiments, it should be appreciated by a person skilled in the art that modifications may still be made to the technical solutions described in the above embodiments, or equivalent substitutions may be made to some of the technical features. However, these modifications or replacements do not cause the essence of corresponding technical solutions to depart from the scope of the technical solutions in embodiments of this application.

**Claims**

1. A communication method, comprising:

   obtaining, by a terminal, access indication information of a repeatedly sent message, wherein the access indication information is used to indicate a random access occasion RO resource pool and/or a code resource pool of the repeatedly sent message, the RO resource pool of the repeatedly sent message is different from an RO resource pool of a single sent message, and/or the code resource pool of the repeatedly sent message is different from a code resource pool of the single sent message;
   determining, by the terminal, the RO resource pool and/or the code resource pool of the repeatedly sent message based on the access indication information; and
   determining, by the terminal, a target resource from the RO resource pool and/or the code resource pool of the repeatedly sent message, and transmitting the repeatedly sent message through the target resource.

2. The method according to claim 1, wherein the repeatedly sent message comprises a first message transmitted through a physical random access channel PRACH, and the first message carries a random access preamble.

3. The method according to claim 1 or 2, wherein the access indication information of the repeatedly sent message indicates that the RO resource pool of the repeatedly sent message is independent of the RO resource pool of the single sent message.

4. The method according to claim 3, wherein the repeatedly sent message and the single sent message share a code resource pool.

5. The method according to claim 3 or 4, wherein the access indication information of the repeatedly sent message comprises an RO configuration index of the repeatedly sent message or an RO offset of the repeatedly sent message relative to the single sent message, and the RO configuration index of the repeatedly sent message points to a newly added RO.

6. The method according to claim 1 or 2, wherein the repeatedly sent message and the single sent message share an RO resource pool, and the access indication information of the repeatedly sent message indicates that the code resource pool of the repeatedly sent message is independent of the code resource pool of the single sent message.

7. The method according to claim 6, wherein the access indication information of the repeatedly sent message comprises a second set of preamble generation parameters or a preamble grouping parameter, the second set of preamble generation parameters are different from a first set of preamble generation parameters in the access indication information of the single sent message, the second set of preamble generation parameters are used to generate preambles in the code resource pool of the repeatedly sent message, and the preamble grouping parameter is used to group preambles generated by the first preamble generation parameters to obtain the preambles in the code resource pool of the repeatedly sent message and preambles in the code resource pool of the single sent message.

8. The method according to any one of claims 1 to 7, wherein a mapping rule for ROs in the RO resource pool of the repeatedly sent message follows a time-domain-first and frequency-domain-second priority.

9. The method according to claim 8, wherein the mapping rule for the ROs in the RO resource pool of the repeatedly sent message follows a time-domain-first and frequency-domain-second priority in a slot, or follows a time-domain-first and frequency-domain-second priority within a random access period.

10. The method according to claim 1 or 2, wherein the access indication information of the repeatedly sent message indicates that an RO resource pool of a non-first sent message in the repeatedly sent message is independent of the RO resource pool of the single sent message.

11. The method according to claim 10, wherein a first sent message in the repeatedly sent message and the single sent message share the RO resource pool.

12. The method according to claim 10 or 11, wherein the access indication information of the repeatedly sent message comprises an RO configuration index of the repeatedly sent message or an RO offset of the repeatedly sent message relative to the single sent message, the RO configuration index of the repeatedly sent message points to a newly added RO, and the newly added RO or the offset RO is used to send the non-first sent message.

13. The method according to any one of claims 10 to 12, wherein a mapping rule for ROs in the RO resource pool of the repeatedly sent message follows a time-domain-first and frequency-domain-second priority.

14. The method according to claim 13, wherein the mapping rule for the ROs in the RO resource pool of the repeatedly sent message follows a time-domain-first and frequency-domain-second priority in a slot, or follows a time-domain-first and frequency-domain-second priority within a random access period.

15. The method according to any one of claims 10 to 12, wherein a mapping rule for ROs in the RO resource pool of the non-first sent message in the repeatedly sent message follows a time-domain-first and frequency-domain-second priority.

16. The method according to claim 15, wherein the mapping rule for the ROs in the RO resource pool of the non-first sent message follows a time-domain-first and frequency-domain-second priority in a slot, or follows a time-domain-first and frequency-domain-second priority within a random access period.

17. The method according to claim 15 or 16, wherein the repeatedly sent message and the single sent message share a code resource pool.

18. A communication method, comprising:

configuring, by a network device, access indication information of a repeatedly sent message, wherein the access indication information is used to indicate a random access occasion RO resource pool and/or a code resource pool of the repeatedly sent message, the RO resource pool of the repeatedly sent message is different from an RO resource pool of a single sent message, and/or the code resource pool of the repeatedly sent message is different from a code resource pool of the single sent message; and
sending, by the network device, the access indication information to the terminal, so that the terminal determines an RO resource pool and/or a code resource pool of the repeatedly sent message based on the access indication information, determining a target resource from the RO resource pool and/or the code resource pool of the repeatedly sent message, and transmitting the repeatedly sent message through the target resource.

19. The method according to claim 18, wherein the repeatedly sent message comprises a first message transmitted through a physical random access channel PRACH, and the first message carries a random access preamble.

20. A communication method, comprising:

obtaining, by a terminal, access indication information of a repeatedly sent message, wherein the access indication information is used to indicate that a random access occasion RO resource pool of the repeatedly sent message is independent of an RO resource pool of a single sent message;
determining, by the terminal, the RO resource pool of the repeatedly sent message based on the access indication information; and
determining, by the terminal, a target RO resource from the RO resource pool of the repeatedly sent message, and transmitting the repeatedly sent message through the target RO resource.

21. The method according to claim 20, wherein the repeatedly sent message comprises a first message transmitted through a physical random access channel PRACH, and the first message carries a random access preamble.

22. The method according to claim 20 or 21, wherein the repeatedly sent message and the single sent message share a code resource pool.

23. The method according to any one of claims 20 to 22, wherein the access indication information of the repeatedly sent message comprises an RO configuration index of the repeatedly sent message or an RO offset of the repeatedly sent message relative to the single sent message, and the RO configuration index of the repeatedly sent message points to a newly added RO.

24. The method according to any one of claims 20 to 23, wherein a mapping rule for ROs in the RO resource pool of the repeatedly sent message follows a time-domain-first and frequency-domain-second priority.

25. The method according to claim 21, wherein the mapping rule for the ROs in the RO resource pool of the repeatedly sent message follows a time-domain-first and frequency-domain-second priority in a slot, or follows a time-domain-first and frequency-domain-second priority within a random access period.

26. A communication method, comprising:

obtaining, by a terminal, access indication information of a repeatedly sent message, wherein the access indication information is used to indicate that a code resource pool of the repeatedly sent message is independent of a code resource pool of the single sent message;
determining, by the terminal, the code resource pool of the repeatedly sent message based on the access indication information; and
determining, by the terminal, a target code resource from the code resource pool, and transmitting the repeatedly sent message through the target code resource.

27. The method according to claim 26, wherein the access indication information of the repeatedly sent message comprises a second set of preamble generation parameters or a preamble grouping parameter, the second set of preamble generation parameters are different from a first set of preamble generation parameters in the access indication information of the single sent message, the second set of preamble generation parameters are used to generate preambles in the code resource pool of the repeatedly sent message, and the preamble grouping parameter is used to group preambles generated by the first preamble generation parameters to obtain the preambles in the code resource pool of the repeatedly sent message and preambles in the code resource pool of the single sent message.

28. The method according to claim 26 or 27, wherein a mapping rule for ROs in the RO resource pool of the repeatedly sent message follows a time-domain-first and frequency-domain-second priority.

29. The method according to claim 28, wherein the mapping rule for the ROs in the RO resource pool of the repeatedly sent message follows a time-domain-first and frequency-domain-second priority in a slot, or follows a time-domain-first and frequency-domain-second priority within a random access period.

30. A communication method, comprising:

obtaining, by a terminal, access indication information of a repeatedly sent message, wherein the access indication information is used to indicate that an RO resource pool of a non-first sent message in the repeatedly sent message is independent of an RO resource pool of a single sent message;
determining, by the terminal, an RO resource pool of a first sent message in the repeatedly sent message and the RO resource pool of the non-first sent message based on the access indication information; and
determining, by the terminal, a first RO from the RO resource pool of the first sent message, determining a second RO from the RO resource pool of the non-first sent message, sending a first message in the repeatedly sent message through the first RO, and sending the remaining messages in the repeatedly sent message through the second RO in the RO resource pool of the non-first sent message.

31. The method according to claim 30, wherein the access indication information of the repeatedly sent message comprises an RO configuration index of the repeatedly sent message or an RO offset of the repeatedly sent message relative to the single sent message, the RO configuration index of the repeatedly sent message points to a newly added RO, and the newly added RO or the offset RO is used to send the non-first sent message.

32. The method according to claim 30 or 31, wherein a mapping rule for ROs in the RO resource pool of the repeatedly sent message follows a time-domain-first and frequency-domain-second priority.

33. The method according to claim 32, wherein the mapping rule for the ROs in the RO resource pool of the repeatedly sent message follows a time-domain-first and frequency-domain-second priority in a slot, or follows a time-domain-first and frequency-domain-second priority within a random access period.

34. The method according to claim 30 or 31, wherein a mapping rule for ROs in the RO resource pool of the non-first sent message in the repeatedly sent message follows a time-domain-first and frequency-domain-second priority.

35. The method according to claim 34, wherein the mapping rule for the ROs in the RO resource pool of the non-first sent message in the repeatedly sent message follows a time-domain-first and frequency-domain-second priority in a slot, or follows a time-domain-first and frequency-domain-second priority within a random access period.

36. The method according to claim 34 or 35, wherein the repeatedly sent message and the single sent message share a code resource pool.

37. A communication apparatus, comprising:

a memory, configured to store a computer program or a computer instruction; and
a processor, configured to execute the computer program or the computer instruction stored in the memory, to enable the communication apparatus to perform the method according to any one of claims 1 to 36.

38. A computer storage medium, configured to store a computer program, wherein the computer program, when being executed, is used to implement the method according to any one of claims 1 to 36.

FIG. 1

| Terminal 2 | | Base station 1 |
|---|---|---|

The terminal 2 sends, to the base station 1 through a PRACH, an MSG1 carrying a preamble

The base station 1 returns, through a PDSCH, an MSG2 carrying an RRA

The terminal 2 sends, to the base station 1, an MSG3 carrying an RRC connection request or a re-establishment request

The base station 1 returns an MSG4 carrying a content resolution message

FIG. 2

Frequency
domain f

| SSB1 | SSB3 |
|------|------|
| SSB1 | SSB3 |
| SSB0 | SSB2 |
| SSB0 | SSB2 |

| SSB5 | SSB7 |
|------|------|
| SSB5 | SSB7 |
| SSB4 | SSB6 |
| SSB4 | SSB6 |

Time
domain t

| Slot | Slot |
|------|------|

| Time-domain resource configuration period |
|---|

FIG. 3

Terminal                                          Base station

S402: The base station configures access indication
information of a repeatedly sent message

Determine an RO resource pool and/or a code
resource pool of the repeatedly sent message
based on the access indication information          S404

Determine a target resource in the RO resource
pool and/or the code resource pool of the          S405
repeatedly sent message

S406: The terminal transmits the repeatedly sent
message through the target resource

FIG. 4

Frequency
domain f

| Legacy PRACH | | | | PRACH Repetition | | | |
|---|---|---|---|---|---|---|---|
| SSB1 | SSB3 | SSB5 | SSB7 | SSB1 | SSB3 | SSB5 | SSB7 |
| SSB1 | SSB3 | SSB5 | SSB7 | SSB1 | SSB3 | SSB5 | SSB7 |
| SSB0 | SSB2 | SSB4 | SSB6 | SSB0 | SSB2 | SSB4 | SSB6 |
| SSB0 | SSB2 | SSB4 | SSB6 | SSB0 | SSB2 | SSB4 | SSB6 |

Time
domain t

| Slot | Slot | Newly added slot | Newly added slot |
|---|---|---|---|

| Time-domain resource configuration period |
|---|

FIG. 5A

Frequency
domain f

| Legacy PRACH | | | | PRACH Repetition | | | |
|---|---|---|---|---|---|---|---|
| SSB1 | SSB3 | SSB5 | SSB7 | SSB1 | SSB3 | SSB5 | SSB7 |
| SSB1 | SSB3 | SSB5 | SSB7 | SSB1 | SSB3 | SSB5 | SSB7 |
| SSB0 | SSB2 | SSB4 | SSB6 | SSB0 | SSB2 | SSB4 | SSB6 |
| SSB0 | SSB2 | SSB4 | SSB6 | SSB0 | SSB2 | SSB4 | SSB6 |

Time
domain t

|←————— Offset —————→|

| Slot | Slot | Newly added slot | Newly added slot |
|---|---|---|---|

| Time-domain resource configuration period |
|---|

FIG. 5B

Frequency
domain f

| Legacy PRACH | | | | PRACH Repetition | | | |
|---|---|---|---|---|---|---|---|
| SSB1 | SSB3 | SSB5 | SSB7 | SSB3 | SSB3 | SSB7 | SSB7 |
| SSB1 | SSB3 | SSB5 | SSB7 | SSB2 | SSB2 | SSB6 | SSB6 |
| SSB0 | SSB2 | SSB4 | SSB6 | SSB1 | SSB1 | SSB5 | SSB5 |
| SSB0 | SSB2 | SSB4 | SSB6 | SSB0 | SSB0 | SSB4 | SSB4 |

◄──────── Offset ────────►

Time
domain t

| Slot | Slot | Newly added slot | Newly added slot |

| Time-domain resource configuration period |

FIG. 5C

Frequency
domain f

| Legacy PRACH | | | | PRACH Repetition | | | |
|---|---|---|---|---|---|---|---|
| SSB1 | SSB3 | SSB5 | SSB7 | SSB6 | SSB6 | SSB7 | SSB7 |
| SSB1 | SSB3 | SSB5 | SSB7 | SSB4 | SSB4 | SSB5 | SSB5 |
| SSB0 | SSB2 | SSB4 | SSB6 | SSB2 | SSB2 | SSB3 | SSB3 |
| SSB0 | SSB2 | SSB4 | SSB6 | SSB0 | SSB0 | SSB1 | SSB1 |

Time
domain t

| Slot | Slot | Newly added slot | Newly added slot |

| Time-domain resource configuration period |

FIG. 5D

| Legacy PRACH | | PRACH Repetition | | Legacy PRACH | | PRACH Repetition | |
|---|---|---|---|---|---|---|---|
| SSB1 | SSB3 | SSB1 | SSB3 | SSB5 | SSB7 | SSB7 | SSB7 |
| SSB1 | SSB3 | SSB1 | SSB3 | SSB5 | SSB7 | SSB6 | SSB6 |
| SSB0 | SSB2 | SSB0 | SSB2 | SSB4 | SSB6 | SSB5 | SSB5 |
| SSB0 | SSB2 | SSB0 | SSB2 | SSB4 | SSB6 | SSB4 | SSB4 |

Frequency domain f

Offset · Slot · Newly added slot · Offset · Slot · Newly added slot

Time domain t

Time-domain resource configuration period

**FIG. 5E**

| PRACH Repetition | | | |
|---|---|---|---|
| SSB3 | SSB3 | SSB7 | SSB7 |
| SSB2 | SSB2 | SSB6 | SSB6 |
| SSB1 | SSB1 | SSB5 | SSB5 |
| SSB0 | SSB0 | SSB4 | SSB4 |

Frequency domain f

Time domain t

Slot · Slot

Time-domain resource configuration period

**FIG. 6A**

Frequency
domain f

| Legacy PRACH | | | |
|---|---|---|---|
| SSB1 | SSB3 | SSB5 | SSB7 |
| SSB1 | SSB3 | SSB5 | SSB7 |
| SSB0 | SSB2 | SSB4 | SSB6 |
| SSB0 | SSB2 | SSB4 | SSB6 |

Time
domain t

| Slot | Slot |
|---|---|

| Time-domain resource configuration period |
|---|

FIG. 6B

Frequency
domain f

| PRACH Repetition | | | |
|---|---|---|---|
| SSB6 | SSB6 | SSB7 | SSB7 |
| SSB4 | SSB4 | SSB5 | SSB5 |
| SSB2 | SSB2 | SSB3 | SSB3 |
| SSB0 | SSB0 | SSB1 | SSB1 |

Time
domain t

| Slot | Slot |
|---|---|

| Time-domain resource configuration period |
|---|

FIG. 6C

Frequency
domain f

| Legacy PRACH | | | | |
|---|---|---|---|---|
| SSB1 | SSB3 | | SSB5 | SSB7 |
| SSB1 | SSB3 | | SSB5 | SSB7 |
| SSB0 | SSB2 | | SSB4 | SSB6 |
| SSB0 | SSB2 | | SSB4 | SSB6 |

Time
domain t

| Slot | Slot |
|---|---|

| Time-domain resource configuration period |
|---|

Frequency
domain f

| PRACH Repetition | | | | | | | |
|---|---|---|---|---|---|---|---|
| SSB1 | SSB3 | SSB5 | SSB7 | SSB1 | SSB3 | SSB5 | SSB7 |
| SSB1 | SSB3 | SSB5 | SSB7 | SSB1 | SSB3 | SSB5 | SSB7 |
| SSB0 | SSB2 | SSB4 | SSB6 | SSB0 | SSB2 | SSB4 | SSB6 |
| SSB0 | SSB2 | SSB4 | SSB6 | SSB0 | SSB2 | SSB4 | SSB6 |

Time
domain t

| Slot | Slot | Newly added slot | Newly added slot |
|---|---|---|---|

| Time-domain resource configuration period |
|---|

FIG. 7A

Frequency
domain f

Legacy PRACH

| SSB1 | SSB3 | | SSB5 | SSB7 |
| SSB1 | SSB3 | | SSB5 | SSB7 |
| SSB0 | SSB2 | | SSB4 | SSB6 |
| SSB0 | SSB2 | | SSB4 | SSB6 |

Time
domain t

| Slot | | Slot |

| Time-domain resource configuration period |

Frequency
domain f

PRACH Repetition

| SSB1 | SSB3 | | SSB5 | SSB7 | | SSB1 | SSB3 | | SSB5 | SSB7 |
| SSB1 | SSB3 | | SSB5 | SSB7 | | SSB1 | SSB3 | | SSB5 | SSB7 |
| SSB0 | SSB2 | | SSB4 | SSB6 | | SSB0 | SSB2 | | SSB4 | SSB6 |
| SSB0 | SSB2 | | SSB4 | SSB6 | | SSB0 | SSB2 | | SSB4 | SSB6 |

Time
domain t

←——— Offset ———→

| Slot | | Slot | | Newly added slot | | Newly added slot |

| Time-domain resource configuration period |

FIG. 7B

Frequency
domain f

| Legacy PRACH | | | | | |
|---|---|---|---|---|---|
| SSB1 | SSB3 | | SSB5 | SSB7 |
| SSB1 | SSB3 | | SSB5 | SSB7 |
| SSB0 | SSB2 | | SSB4 | SSB6 |
| SSB0 | SSB2 | | SSB4 | SSB6 |

| Slot | | Slot |
|---|---|---|

| Time-domain resource configuration period |
|---|

Time
domain t

Frequency
domain f

| PRACH Repetition | | | | | | | |
|---|---|---|---|---|---|---|---|
| SSB3 | SSB3 | SSB7 | SSB7 | SSB3 | SSB3 | SSB7 | SSB7 |
| SSB2 | SSB2 | SSB6 | SSB6 | SSB2 | SSB2 | SSB6 | SSB6 |
| SSB1 | SSB1 | SSB5 | SSB5 | SSB1 | SSB1 | SSB5 | SSB5 |
| SSB0 | SSB0 | SSB4 | SSB4 | SSB0 | SSB0 | SSB4 | SSB4 |

|◄——————— Offset ———————►|

| Slot | | Slot | | Newly added slot | Newly added slot |
|---|---|---|---|---|---|

Time
domain t

| Time-domain resource configuration period |
|---|

FIG. 7C

**Frequency domain f**

| Legacy PRACH | | | | |
|---|---|---|---|---|
| SSB1 | SSB3 | | SSB5 | SSB7 |
| SSB1 | SSB3 | | SSB5 | SSB7 |
| SSB0 | SSB2 | | SSB4 | SSB6 |
| SSB0 | SSB2 | | SSB4 | SSB6 |

**Time domain t**

| Slot | Slot |
|---|---|

| Time-domain resource configuration period |
|---|

**Frequency domain f**

| PRACH Repetition | | | | | | | |
|---|---|---|---|---|---|---|---|
| SSB6 | SSB6 | SSB7 | SSB7 | SSB6 | SSB6 | SSB7 | SSB7 |
| SSB4 | SSB4 | SSB5 | SSB5 | SSB4 | SSB4 | SSB5 | SSB5 |
| SSB2 | SSB2 | SSB3 | SSB3 | SSB2 | SSB2 | SSB3 | SSB3 |
| SSB0 | SSB0 | SSB1 | SSB1 | SSB0 | SSB0 | SSB1 | SSB1 |

**Time domain t**

← Offset →

| Slot | Slot | Newly added slot | Newly added slot |
|---|---|---|---|

| Time-domain resource configuration period |
|---|

FIG. 7D

Frequency
domain f

| Legacy PRACH | | | | | |
|---|---|---|---|---|---|
| SSB1 | SSB3 | | SSB5 | SSB7 | |
| SSB1 | SSB3 | | SSB5 | SSB7 | |
| SSB0 | SSB2 | | SSB4 | SSB6 | |
| SSB0 | SSB2 | | SSB4 | SSB6 | |

Time
domain t

| Slot | Slot |
|---|---|

| Time-domain resource configuration period |
|---|

Frequency
domain f

| PRACH Repetition | | | | | | | |
|---|---|---|---|---|---|---|---|
| SSB1 | SSB3 | SSB5 | SSB7 | SSB3 | SSB3 | SSB7 | SSB7 |
| SSB1 | SSB3 | SSB5 | SSB7 | SSB2 | SSB2 | SSB6 | SSB6 |
| SSB0 | SSB2 | SSB4 | SSB6 | SSB1 | SSB1 | SSB5 | SSB5 |
| SSB0 | SSB2 | SSB4 | SSB6 | SSB0 | SSB0 | SSB4 | SSB4 |

Time
domain t

|◄─── Offset ───►|

| Slot | Slot | Newly added slot | Newly added slot |
|---|---|---|---|

| Time-domain resource configuration period |
|---|

FIG. 7E

FIG. 7F

Antenna 1

Antenna 2

| Mobile communication module<br>2G/3G/4G/5G<br>[350] | Wireless communication module<br>BT/WLAN/GNSS/NFC/IR/FM<br>[360] |

| Display screens 1-N [330] | | Internal memory [321] |

Processor [310]

| Cameras 1-N [340] | | External memory interface [320] |

FIG. 8

933

900

Communication apparatus

930

910

Transceiver machine

Processor

Transmitter

931

920

Memory

932

Receiver

Computer program code

FIG. 9

## INTERNATIONAL SEARCH REPORT

| International application No. |
| --- |
| **PCT/CN2023/130368** |

| A. | CLASSIFICATION OF SUBJECT MATTER |
| --- | --- |

H04W74/08(2024.01)i;  H04W72/12(2023.01)i

According to International Patent Classification (IPC) or to both national classification and IPC

| B. | FIELDS SEARCHED |
| --- | --- |

Minimum documentation searched (classification system followed by classification symbols)

IPC:  H04W

Documentation searched other than minimum documentation to the extent that such documents are included in the fields searched

Electronic data base consulted during the international search (name of data base and, where practicable, search terms used)

CNTXT, ENTXTC, EXTXT, VEN, 3GPP: 随机接入, 前导码, 消息1, 重传, 重复, 再次, 初次, 首次, 资源池, 资源集合, 资源组, random access, PRACH, preamble, RO, pool, set, group, repetition, Msg1, retransmission

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 112040558 A (CHINA ACADEMY OF INFORMATION AND COMMUNICATIONS TECHNOLOGY) 04 December 2020 (2020-12-04)<br>claims 1-17, and description, paragraphs 39-112 | 1-29, 37, 38 |
| X | CN 111226487 A (BEIJING XIAOMI MOBILE SOFTWARE CO., LTD.) 02 June 2020 (2020-06-02)<br>claims 1-32, and description, paragraphs 44-70 | 30-38 |
| X | CN 109769303 A (CHENDU TD TECH LTD.) 17 May 2019 (2019-05-17)<br>description, paragraphs 111-133 | 1-25, 37, 38 |
| X | CN 113498212 A (RESEARCH INSTITUTE OF CHINA MOBILE COMMUNICATIONS CORP. et al.) 12 October 2021 (2021-10-12)<br>description, paragraphs 139-228 | 30-38 |
| X | WO 2023020542 A1 (HUAWEI TECHNOLOGIES CO., LTD.) 23 February 2023 (2023-02-23)<br>description, pages 14-41 | 1-19, 26-29, 37, 38 |

| ☑ Further documents are listed in the continuation of Box C. | ☑ See patent family annex. |
| --- | --- |

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **24 January 2024** | **02 February 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/130368** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 108633096 A (BEIJING SAMSUNG TELECOM R&D CENTER et al.) 09 October 2018 (2018-10-09) entire document | 1-38 |
| A | WO 2019213977 A1 (HUAWEI TECHNOLOGIES CO., LTD.) 14 November 2019 (2019-11-14) entire document | 1-38 |

Form PCT/ISA/210 (second sheet) (July 2022)

**INTERNATIONAL SEARCH REPORT**
**Information on patent family members**

International application No.

**PCT/CN2023/130368**

| Patent document cited in search report | | | Publication date (day/month/year) | Patent family member(s) | | | Publication date (day/month/year) |
|---|---|---|---|---|---|---|---|
| CN | 112040558 | A | 04 December 2020 | None | | | |
| CN | 111226487 | A | 02 June 2020 | US | 2022322453 | A1 | 06 October 2022 |
| | | | | WO | 2020237681 | A1 | 03 December 2020 |
| CN | 109769303 | A | 17 May 2019 | None | | | |
| CN | 113498212 | A | 12 October 2021 | None | | | |
| WO | 2023020542 | A1 | 23 February 2023 | None | | | |
| CN | 108633096 | A | 09 October 2018 | EP | 3603303 | A1 | 05 February 2020 |
| | | | | KR | 20190125355 | A | 06 November 2019 |
| | | | | US | 2018279363 | A1 | 27 September 2018 |
| | | | | WO | 2018174526 | A1 | 27 September 2018 |
| | | | | US | 2020305190 | A1 | 24 September 2020 |
| | | | | KR | 20230082057 | A | 08 June 2023 |
| | | | | CN | 116437465 | A | 14 July 2023 |
| WO | 2019213977 | A1 | 14 November 2019 | CN | 112136350 | A | 25 December 2020 |

Form PCT/ISA/210 (patent family annex) (July 2022)

**EP 4 637 251 A1**